(19) Europäisches Patentamt
European Patent Office
Office européen des brevets

(11) **EP 4 773 644 A1**

(12) **EUROPEAN PATENT APPLICATION**
published in accordance with Art. 153(4) EPC

(43) Date of publication:
08.07.2026 Bulletin 2026/28

(21) Application number: 24878451.4

(22) Date of filing: 15.05.2024

(51) International Patent Classification (IPC):
*H04W 12/033* (2021.01)

(52) Cooperative Patent Classification (CPC):
H04L 1/08; H04L 9/06; H04L 9/32; H04W 12/033;
H04W 12/106

(86) International application number:
PCT/CN2024/093375

(87) International publication number:
WO 2025/081798 (24.04.2025 Gazette 2025/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.10.2023 CN 202311375868

(71) Applicant: ZTE Corporation
Shenzhen, Guangdong 518057 (CN)

(72) Inventors:
• LI, Yun
Shenzhen, Guangdong 518057 (CN)
• ZHANG, Yaodong
Shenzhen, Guangdong 518057 (CN)
• LI, Yan
Shenzhen, Guangdong 518057 (CN)

(74) Representative: Carangelo, Pierluigi et al
Jacobacci & Partners S.p.A.
Via Tomacelli 146
00186 Roma (IT)

(54) **WIRELESS COMMUNICATION METHOD, WIRELESS COMMUNICATION DEVICE, MEDIUM, AND PROGRAM PRODUCT**

(57) Embodiments of the present application provide a wireless communication method, a wireless communication device, a computer readable storage medium, and a computer program product. The wireless communication method comprises: a first media access control protocol data unit (MPDU) frame comprising a first frame header field and a frame body field; obtaining an extended message integrity code (MIC) field on the basis of the first frame header field (S100); performing encryption computation on plaintext data in the frame body field to obtain a ciphertext data field (S200); obtaining an encryption computation header field on the basis of a PN value and a first key (S300); and obtaining a second MPDU frame on the basis of the first frame header field, the encryption computation header field, the ciphertext data field, and the extended MIC field, wherein the second MPDU frame is an encrypted MPDU frame (S400).

S100 — Obtains an extended Message Integrity Code (MIC) field according to a first frame header field

S200 — Performs an encryption calculation on plaintext data in a frame body field to obtain a ciphertext data field

S300 — Obtains an encryption calculation header field according to a Packet Number (PN) value and a first key

S400 — Obtains a second Media Access Control Protocol Data Unit (MPDU) frame according to the first frame header field, the encryption calculation header field, the ciphertext data field, and the extended MIC field

FIG. 14

**Description**

**CROSS-REFERENCE TO RELATED APPLICATION**

This application is filed on the basis of Chinese patent application No. 202311375868.5 filed October 20, 2023, and claims priority to the Chinese patent application, the entire contents of which are incorporated herein by reference.

**TECHNICAL FIELD**

Embodiments of the present application relate to the field of communication technologies, and more particularly, to a wireless communication method, a wireless communication device, a computer-readable storage medium, and a computer program product.

**BACKGROUND**

With the development of the mobile Internet, an increasing number of communication devices or terminals need to perform wireless communication. IEEE 802.11 is a wireless network communication standard defined by the Institute of Electrical and Electronics Engineers (IEEE). The IEEE 802.11 Robust Security Network Association (RSNA) standard defines an encryption procedure of a Media Access Control Protocol Data Unit (MPDU).

In the related technologies, integrity protection of a Media Access Control (MAC) frame header is implemented by constructing Additional Authentication Data (AAD). However, since masked fields in the MAC frame header are susceptible to attacks, the reliability of MPDU retransmission is reduced. Therefore, how to improve the reliability of the MAC frame header and reduce the possibility of being attacked is an urgent problem to be discussed and solved.

**SUMMARY**

Embodiments of the present application provide a wireless communication method, a wireless communication device, a computer-readable storage medium, and a computer program product, so as to implement a wireless communication method with higher reliability and related communication devices.

In a first aspect, an embodiment of the present application provides a wireless communication method, comprising: a first Media Access Control Protocol Data Unit (MPDU) frame comprising a first frame header field and a frame body field; obtaining an extended Message Integrity Code (MIC) field based on the first frame header field; performing an encryption calculation on plaintext data in the frame body field to obtain a ciphertext data field; obtaining an encryption calculation header field based on a Packet Number (PN) value and a first key; and obtaining a second MPDU frame based on the first frame header field, the encryption calculation header field, the ciphertext data field, and the extended MIC field, wherein the second MPDU frame is an encrypted MPDU frame.

In a second aspect, an embodiment of the present application provides a wireless communication method, comprising: a first Media Access Control Protocol Data Unit (MPDU) frame comprising a first frame header field and a frame body field; obtaining an extended Message Integrity Code (MIC) field based on the first frame header field; performing a verification calculation on plaintext data in the frame body field to obtain a first Management MIC Element (MME) field; and obtaining a second MPDU frame based on the first frame header field, the first MME field, and the extended MIC field.

In a third aspect, an embodiment of the present application provides a wireless communication device, comprising: at least one processor; and at least one memory configured to store at least one program, wherein when the at least one program is executed by the at least one processor, the method according to any one of the first aspect or the second aspect is implemented.

In a fourth aspect, an embodiment of the present application provides a computer-readable storage medium storing computer-executable instructions, wherein the computer-executable instructions are used to perform the method according to any one of the first aspect or the second aspect.

In a fifth aspect, an embodiment of the present application provides a computer program product, comprising a computer program or computer instructions, wherein the computer program or the computer instructions are stored in a computer-readable storage medium, a processor of a computer device reads the computer program or the computer instructions from the computer-readable storage medium, and the processor executes the computer program or the computer instructions, such that the computer device performs the method according to any one of the first aspect or the second aspect.

According to the wireless communication method, the wireless communication device, the computer-readable storage medium, and the computer program product provided by embodiments of the present application, when performing MPDU encryption or integrity protection, an extended Message Integrity Code (MIC) field is generated for frame header fields not protected by Additional Authentication Data (AAD) and inserted into the MPDU, thereby improving the reliability of the frame header. Meanwhile, when performing MPDU retransmission, only the extended MIC field may be calculated and updated, thereby improving communication efficiency.

## BRIEF DESCRIPTION OF DRAWINGS

FIG. 1 is a schematic structural diagram of an MPDU frame protected by CCMP;

FIG. 2 is a schematic structural diagram of an MPDU frame protected by GCMP;

FIG. 3 is a schematic structural diagram of an MPDU management frame protected by BIP;

FIG. 4 is a schematic flowchart of pairwise key generation;

FIG. 5 is a schematic flowchart of master key generation;

FIG. 6 is a schematic flowchart of a 4-way handshake;

FIG. 7 is a schematic structural diagram of an RSNE field;

FIG. 8 is a definition diagram of a cipher suite;

FIG. 9 is a definition diagram of an RSNXE field;

FIG. 10 is a schematic flowchart of constructing Additional Authentication Data (AAD) by taking CCMP as an example;

FIG. 11 is a schematic flowchart of MPDU encryption by taking CCMP as an example;

FIG. 12 is a schematic structural diagram of masked fields in a frame header of an MPDU frame;

FIG. 13 is a diagram of HTC extended functions;

FIG. 14 is a flowchart of a wireless communication method provided in an embodiment of the present application;

FIG. 15 is a schematic structural diagram of fields to be verified provided in an embodiment of the present application;

FIG. 16 is a schematic structural diagram of adding a protection indication identifier in an RSNXE field according to an embodiment of the present application;

FIG. 17 is a flowchart of a wireless communication method provided in an embodiment of the present application;

FIG. 18 is a schematic structural diagram of fields to be verified provided in another embodiment of the present application;

FIG. 19(a) is a schematic structural diagram of a Management MIC Element (MME) field provided in an embodiment of the present application;

FIG. 19(b) is a schematic structural diagram of a Management MIC Element (MME) field provided in another embodiment of the present application;

FIG. 20(a) is a schematic negotiation flowchart of probe association between network nodes provided in an embodiment of the present application;

FIG. 20(b) is a schematic negotiation flowchart of probe association between network nodes provided in another embodiment of the present application;

FIG. 21 is a schematic diagram of extended MIC calculation provided in an embodiment of the present application;

FIG. 22 is a schematic diagram of extended MIC calculation provided in another embodiment of the present application;

FIG. 23 is a schematic diagram of extended MIC calculation provided in another embodiment of the present application;

FIG. 24 is a schematic diagram of extended MIC calculation provided in another embodiment of the present application;

FIG. 25 is a schematic structural diagram of an extended CCMP frame provided in an embodiment of the present application;

FIG. 26 is a schematic structural diagram of an extended GCMP frame provided in an embodiment of the present application;

FIG. 27 is a schematic diagram of extended MIC calculation provided in another embodiment of the present application;

FIG. 28 is a schematic diagram of extended MIC calculation provided in another embodiment of the present application;

FIG. 29 is a schematic structural diagram of an extended CCMP frame provided in another embodiment of the present application;

FIG. 30 is a schematic structural diagram of an extended GCMP frame provided in another embodiment of the present application;

FIG. 31 is a schematic structural diagram of a network node provided in an embodiment of the present application.

## DETAILED DESCRIPTION

In order to make the objectives, technical solutions, and advantages of the present application clearer, the present application is further described in detail below with reference to the accompanying drawings and embodiments. It should be understood that the specific embodiments described herein are merely used to explain the present application, and are not intended to limit the present application.

It should be noted that although functional modules are divided in the schematic diagrams of devices and logical sequences are shown in the flowcharts, in some cases, the steps shown or described may be performed in an order different from that of the module division in the devices or the order in the flowcharts. The terms "first," "second," and the like in the specification, the claims, and the accompanying drawings are used to distinguish similar objects and are not necessarily used to describe a specific order or sequence.

In the embodiments of the present application, terms such as "further," "exemplarily," or "optionally" are used to indicate that the description is used as an example, illustration, or explanation, and should not be construed as being more preferred or advantageous than other embodiments or designs. The use of terms such as "further," "exemplarily," or "optionally" is intended to present related concepts in a specific manner.

The IEEE 802.11 Baseline defines a Robust Security Network Association (RSNA) standard, which is used for key generation, distribution, encryption and decryption, so as to protect wireless network security. In the standard, security algorithms are divided into two categories: Pre-Robust Security Network Association (Pre-RSNA) security algorithms and RSNA security algorithms. The Pre-RSNA algorithms include Wired Equivalent Privacy (WEP), Open System Authentication, and Shared Key Authentication. The RSNA algorithms include Temporal Key Integrity Protocol (TKIP), Counter with Cipher Block Chaining Message Authentication Code Protocol (CCMP), Galois Counter Mode Protocol (GCMP), Broadcast/Multicast Integrity Protocol (BIP), RSNA establishment and termination procedures, key management procedures, and the like.

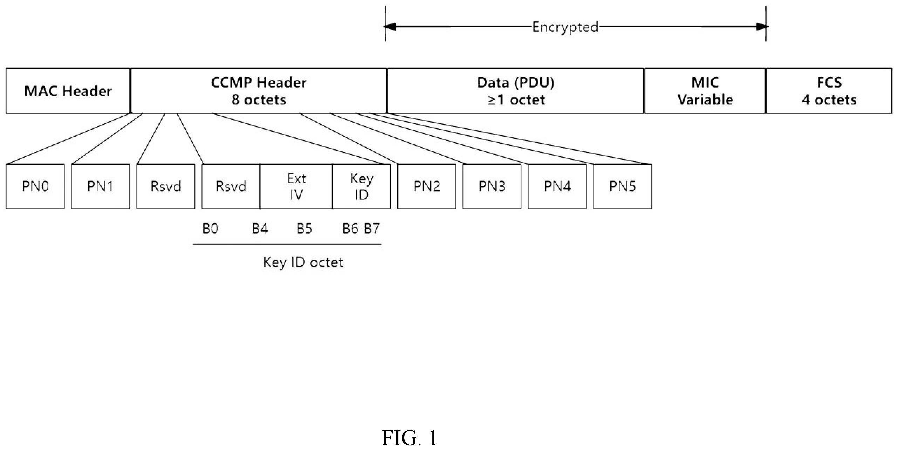

In the related technologies, CCMP is used to provide data confidentiality, authentication, data integrity, and replay protection. CCMP is based on the Advanced Encryption Standard (AES) encryption algorithm CCM, and protects the integrity of selected portions of the IEEE 802.11 MPDU frame header and the MPDU data field. The CCM encryption algorithm generates ciphertext and a Message Integrity Code (MIC). A receiver decrypts a frame body and compares a received MIC with a calculated MIC to perform an MIC check. The format of an MPDU frame protected by CCMP is shown in FIG. 1, and includes a MAC frame header field, a CCMP header field (8 octets), Data (a Protocol Data Unit (PDU), at least one octet), a Message Integrity Code (MIC) field, and an FCS field (4 octets). The Data and the Message Integrity Code (MIC) field are Encrypted, and the Message Integrity Code (MIC) field is variable. CCMP-128 processing expands the size of an original MPDU by 16 octets, where 8 octets are used for the CCMP header field and 8 octets are used for the MIC field; CCMP-256 processing expands the size of the original MPDU by 24 octets, where 8 octets are used for the CCMP header field and 16 octets are used for the MIC field.

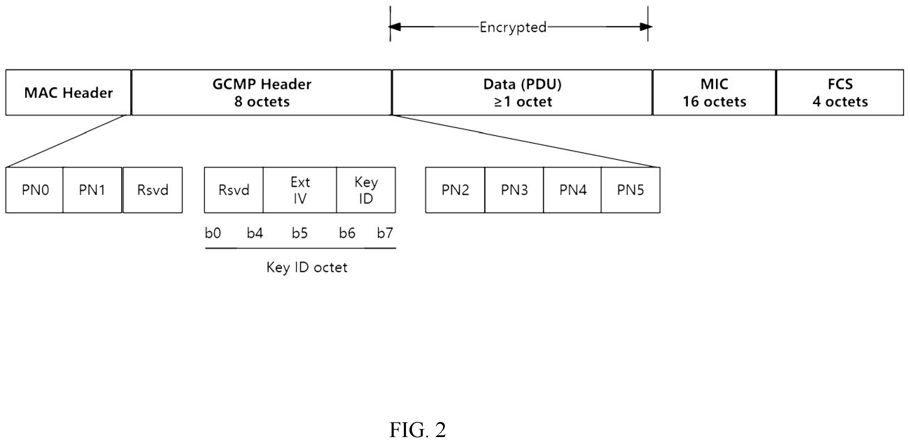

GCMP is used to provide data confidentiality, authentication, data integrity, and replay protection. GCMP is based on the AES encryption algorithm GCM, and protects the integrity of the MPDU data field and selected portions of the MPDU frame header. The GCM encryption algorithm generates ciphertext and a Message Integrity Code (MIC). A receiver decrypts a frame body and compares a received MIC with a calculated MIC to perform an MIC check. The format of an MPDU frame protected by GCMP is shown in FIG. 2, and includes a MAC frame header field, a GCMP header field (8 octets), Data (a Protocol Data Unit (PDU), at least one octet), a Message Integrity Code (MIC) field (16 octets), and an FCS field (4 octets). The Data is Encrypted. GCMP processing expands the size of an original MPDU by 24 octets, where 8 octets are used for the GCMP header field and 16 octets are used for the MIC field.

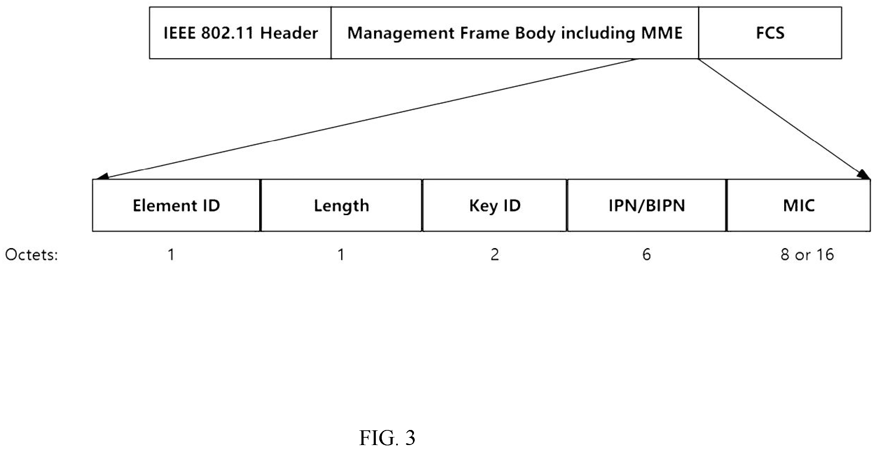

BIP is used for data integrity and replay protection of multicast robust management frames and Beacon frames. The format of an MPDU frame protected by BIP is shown in FIG. 3, and includes an IEEE 802.11 frame header field, a Management Frame Body including a Management MIC Element (MME), and an FCS field.

The IEEE 802.11 RSNA standard further defines a protocol using Extensible Authentication Protocol over LAN key Protocol Data Units (EAPOL-Key PDU), referred to as a 4-way handshake, which is mainly used to complete key negotiation and generate a Pairwise Transient Key (PTK), a Group Temporal Key (GTK), an Integrity Group Temporal Key (IGTK), and a beacon integrity group temporal key (BIGTK).

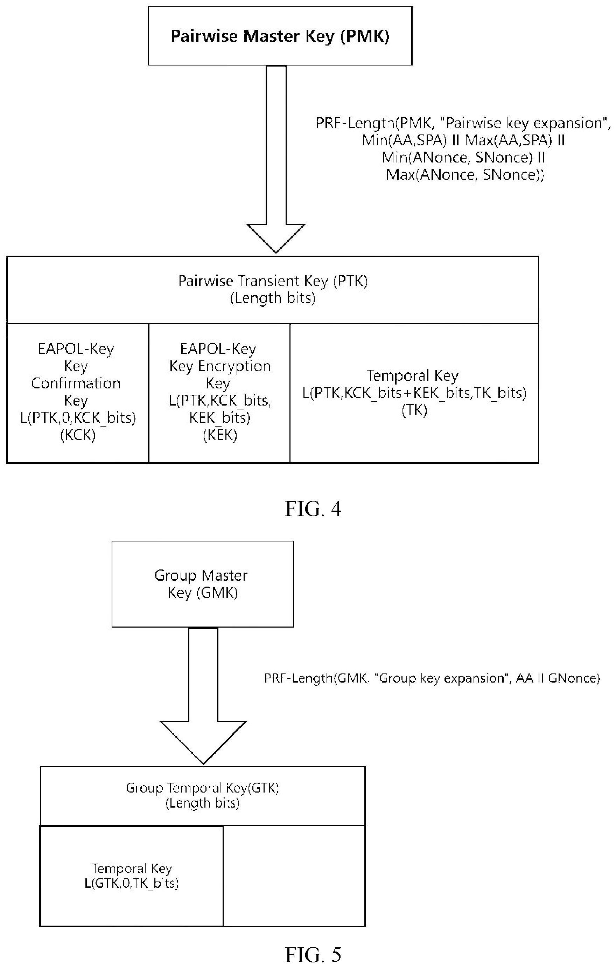

The PTK is generated from a Pairwise Master Key (PMK) through the 4-way handshake and is used to protect unicast traffic. FIG. 4 shows a generation process of a pairwise key. The Pairwise Transient Key (PTK) is generated from the Pairwise Master Key (PMK). A specific calculation formula is:

PRF-Length (PMK, "Pairwise key expansion", Min (AA, SPA) ∥ Max (AA, SPA) ∥ Min (ANonce, SNonce) ∥ Max (ANonce, SNonce)),

where the Pairwise Transient Key (PTK) includes an EAPOL-Key Confirmation Key (KCK), an EAPOL-Key Encryption Key (KEK), and a Temporal Key (TK).

The GTK is generated from a Group Master Key (GMK) through the 4-way handshake and is used to protect multicast traffic. FIG. 5 shows a generation process of a group key. The Group Temporal Key (GTK) is generated from the Group Master Key (GMK). A specific calculation formula is:
PRF-Length (GMK, "Group key expansion", AA ∥ GNonce).

The IGTK is generated through the 4-way handshake and is used to protect integrity of multicast Robust Management Frames. The BIGTK is also distributed through the 4-way handshake and is used to protect integrity of Beacon frames.

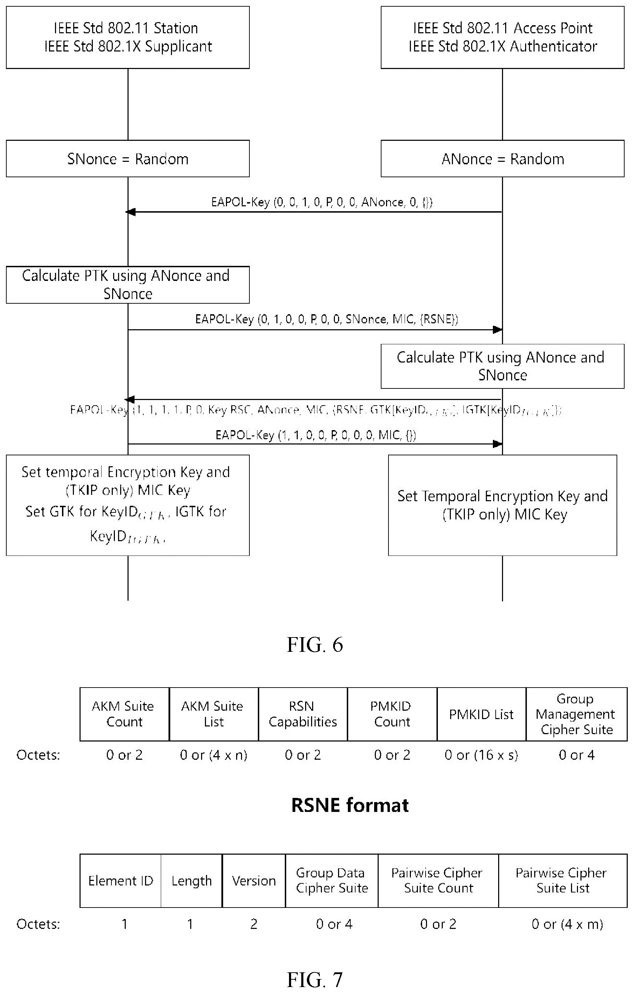

As shown in FIG. 6, the 4-way handshake includes the following steps:

a) An authenticator sends an EAPOL-Key containing ANonce, where ANonce is a random number generated by an Access Point (AP).

b) A supplicant derives a PTK from ANonce and SNonce, where SNonce is a random number generated by a Station (STA).

c) The supplicant sends an EAPOL-Key containing SNonce, a Robust Security Network Element (RSNE) from an (Re) Association Request frame, and an MIC.

d) The authenticator derives a PTK from ANonce and SNonce and verifies the MIC in the EAPOL-Key.

e) The authenticator sends an EAPOL-Key containing ANonce, an RSNE from its Beacon or Probe Response frame, an MIC, a GTK, an IGTK, and a BIGTK.

f) The supplicant sends an EAPOL-Key to confirm whether the Temporal Key is installed.

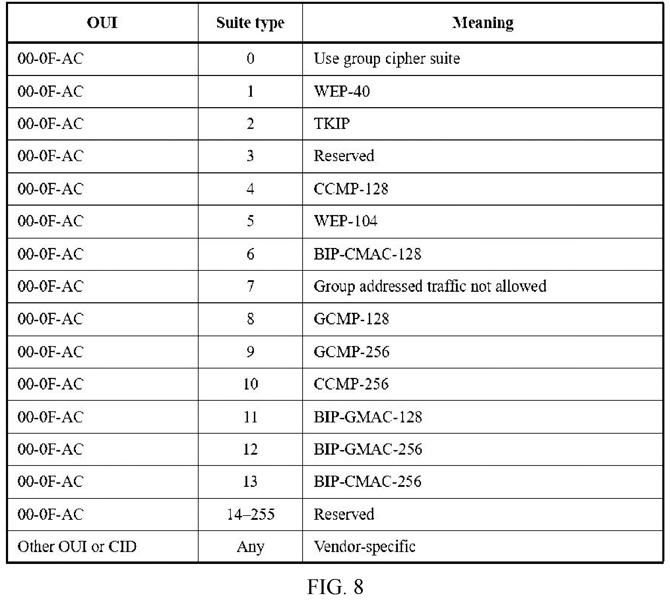

The RSNE field in the above steps contains information required to establish an RSNA and is used for an AP and a STA to negotiate RSNA capabilities. FIG. 7 shows a structure of the RSNE field, which includes a plurality of cipher suites. A Group Data Cipher Suite field and a Pairwise Cipher Suite field are used to negotiate a group cipher suite and a pairwise cipher suite. FIG. 8 shows definition information of cipher suites.

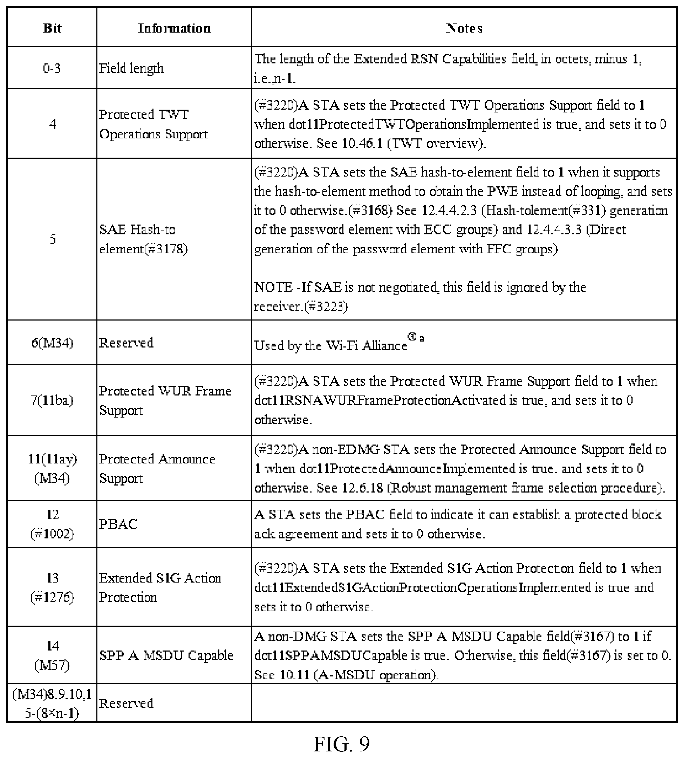

A Robust Security Network extension element (RSNXE) field is an extension element of a Robust Security Network (RSN) and contains additional information for establishing an RSNA. FIG. 9 shows specific definition information of the RSNXE field.

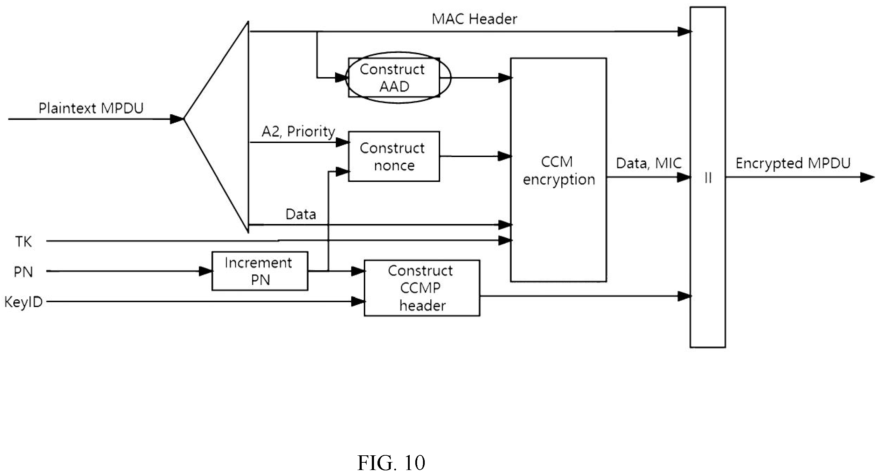

Keys generated based on the 4-way handshake are used for encryption and integrity verification of an MPDU frame. In the IEEE 802.11 standard, only a Payload of an MPDU frame body is encrypted, and a frame header is not encrypted to ensure visibility to all receivers. For a management frame protected by BIP, the Payload is not encrypted. In order to ensure that integrity of the frame header is not illegally modified, Additional Authentication Data (AAD) is constructed during the encryption process as an input to an encryption module. The AAD includes part of fields of the frame header and, together with plaintext data, is used to calculate an MIC. A receiving end performs integrity verification on an entire frame according to the MIC to determine whether it has been illegally modified. FIG. 10 shows, by taking CCMP as an example, a construction process of AAD. AAD is constructed (Construct AAD) according to a frame header portion of a plaintext MPDU and used as an input to a CCM encryption module. In combination with other inputs, ciphertext Data and an encrypted MIC field are obtained.

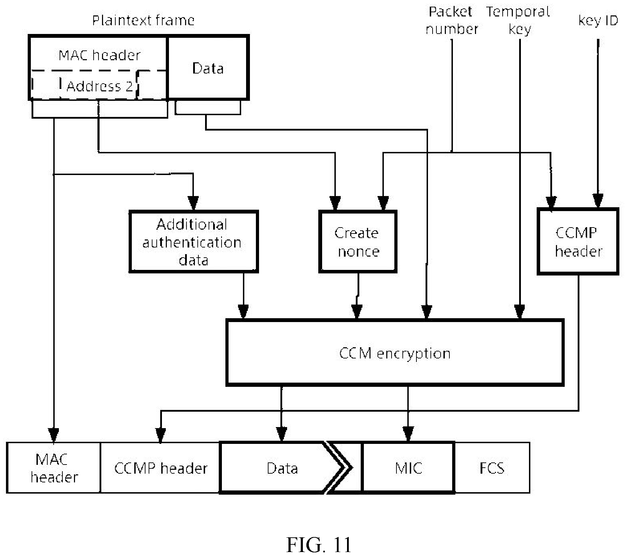

In the IEEE 802.11 RSNA standard, an MPDU encryption process has four inputs. In addition to the constructed AAD, the inputs further include a Number Once (Nonce) used only once, plaintext Data, and a Temporal Key (TK). The encryption module has two outputs, namely ciphertext Data and an MIC. FIG. 11 shows, by taking CCMP as an example, an encryption process of an MPDU frame. AAD is created according to a frame header, and a Nonce is created according to plaintext data in a frame body and a Packet Number (PN).

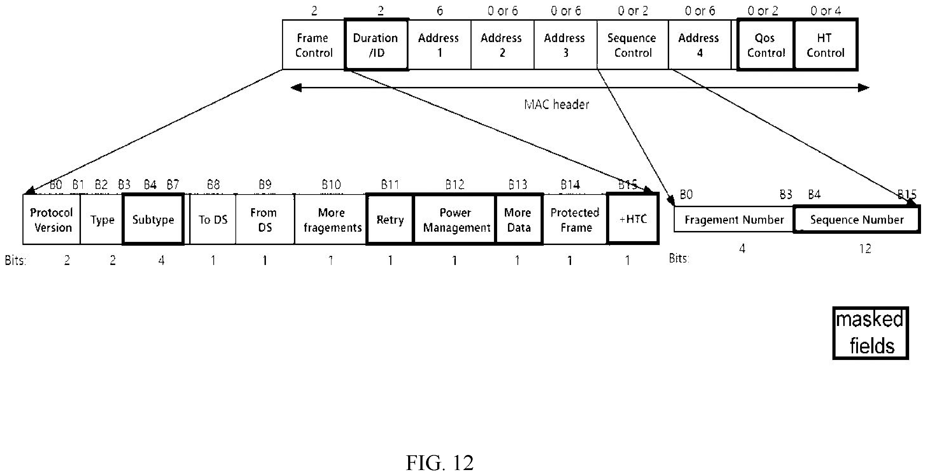

Since values of some fields in an MPDU change during retransmission, in order to avoid re-encrypting the MPDU during retransmission, the Baseline masks fields that may change. FIG. 12 shows masked fields in a frame header of an MPDU frame. These masked fields are not included in the AAD, and therefore cannot be protected by integrity protection, and are vulnerable to attacks.

In some examples, possible attack scenarios include the following scenarios.

(1) For an unprotected Power Management (PM) bit in the frame header, an attacker may send a spoofed powersaving frame (used to indicate that a client is entering a sleep mode), then send an authentication or association frame to reset a wireless connection. Subsequently, through a wake-up frame, an Access Point may resume buffered data in an undefined context, causing data frame leakage.

(2) For an unprotected Sequence Number (SN) field, an attacker may use a replayed frame with a modified SN to cause confusion in a receiver scoreboard and a reordering buffer context. Such an attack cannot be protected by PN verification.

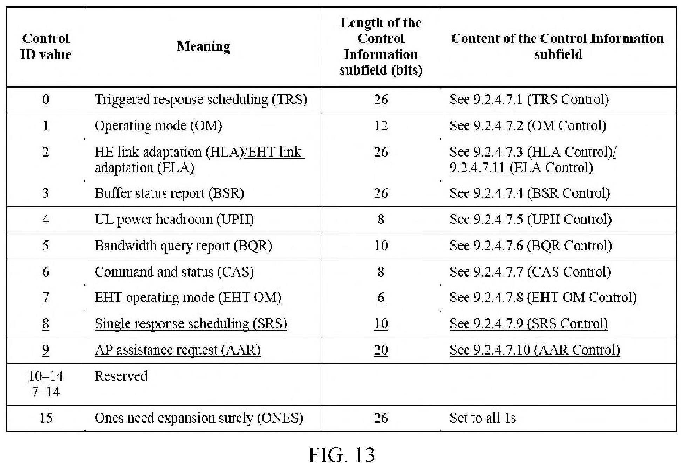

(3) For an unprotected HT-Control field, an attacker may attack a receiver in various manners. FIG. 13 shows extended functions of HT-Control in 802.11ax and 802.11be. In one example, by forging a Triggered Response Scheduling (TRS), a receiver may be caused to continuously send a TB PPDU, thereby wasting air interface resources and continuously consuming power. By forging an Operating Mode (OM) indication, a receiver may be caused to continuously operate in a low bandwidth and low spatial stream state. By forging a Buffer Status Report (BSR), a receiver may obtain an incorrect data buffer state, resulting in a Station being unable to be normally scheduled, and so on. As more functions are extended in the HT-Control field, it becomes more vulnerable to attacks.

In July 2022, IEEE established an Ultra High Reliability (UHR) Study Group (SG). The task of the SG is to study an evolution direction of next-generation Wireless Fidelity-8 (Wi-Fi 8) technology, and it is planned to establish an 802.11bn working group in November 2023 and draft a Wi-Fi 8 protocol definition. UHR is committed to improving reliability, reducing latency, and reducing device power consumption.

Based on the foregoing, the present application provides a wireless communication method, a wireless communication device, a computer-readable storage medium, and a computer program product. The wireless communication method provided in one embodiment of the present application generates an extended MIC for frame header fields not protected by Additional Authentication Data (AAD) and inserts the extended MIC into an MPDU, thereby improving reliability of a UHR frame header. The wireless communication method provided in another embodiment of the present application no longer constructs AAD, but generates an extended MIC for an entire frame header or an entire frame and inserts the extended MIC into an MPDU, thereby improving reliability of the UHR frame header while reducing steps of constructing AAD. In one embodiment of the present application, encryption of a payload portion of an MPDU frame body is separated from integrity verification of the MPDU frame, such that during MPDU retransmission, only the extended MIC is calculated and updated, thereby improving communication efficiency of retransmission.

In the embodiments of the present application, an AP may be an evolved NodeB (eNB), a Transmission Reception Point (TRP), a Next Generation NodeB (gNB) in an NR system, a base station in another future mobile communication system, or an access node in a Wireless Fidelity (WiFi) system, and the like. The embodiments of the present application do not limit specific technologies or specific device forms adopted by a network device.

In the embodiments of the present application, a STA may be a terminal device, user equipment (UE), a mobile station (MS), a mobile terminal (MT), and the like. The terminal device may be an automobile having a communication function, a smart automobile, a mobile phone, a wearable device, a tablet computer (Pad), a computer having a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, and the like.

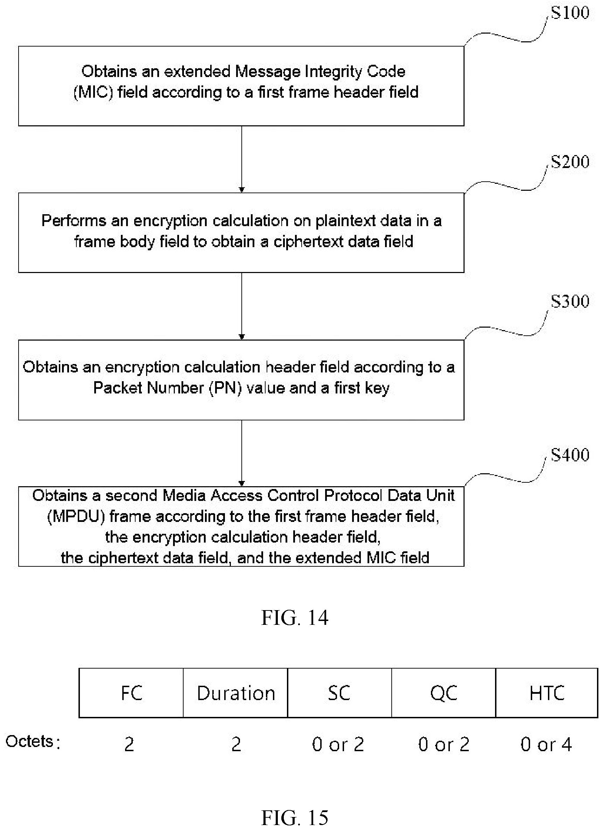

FIG. 14 is a flowchart of a wireless communication method provided in an embodiment of the present application. The wireless communication method may be applied to an AP or a STA, and may include, but is not limited to, steps S100, S200, S300, and S400.

At S100, an extended Message Integrity Code (MIC) field is obtained according to a first frame header field.

In one embodiment, a first Media Access Control Protocol Data Unit (MPDU) frame comprises a first frame header field and a frame body field. The first MPDU frame is an original MPDU frame that is not encrypted and not subjected to integrity protection, and comprises the first frame header field and the frame body field. The first frame header field is a frame header field of the original MPDU frame, and the frame body portion comprises unencrypted plaintext data.

In one embodiment, extended MIC calculation is performed according to partial fields of the first frame header field to obtain the extended MIC field.

It should be noted that the partial fields of the first frame header field are masked fields to be verified in the first frame header field, that is, fields requiring additional protection in the first frame header field.

In one embodiment, a structure of the fields to be verified may be as shown in FIG. 15, including an FC-MPDU Frame Control field, a Duration field, a Sequence Number field in an SC-Sequence Control field, subfields other than a TID field in a QC-Qos Control field, and an HTC-HT Control field and extended fields thereof. The FC field includes a Subtype field, a Retry field, a Power Management field, a More Data field, a +HTC field, and other fields filled with 0.

Since extended MIC calculation is performed on the fields to be verified, a receiving end may perform integrity verification on the fields to be verified according to the extended MIC field, thereby reducing a possibility that the frame header is attacked and improving reliability of the frame header.

In another embodiment, extended MIC calculation is performed according to all fields of the first frame header field to obtain the extended MIC field.

In another embodiment, extended MIC calculation is performed according to all fields of the first frame header field and all fields of the frame body (that is, an entire first MPDU frame), to obtain the extended MIC field.

In one embodiment, extended MIC calculation may adopt a Cipher-based Message Authentication Code (CMAC) mode. The first frame header field, a second key, and a length of the extended MIC field to be output are used as inputs of a CMAC algorithm to calculate the extended MIC field.

In one embodiment, the second key is a key used to calculate the extended MIC field and is generated during association negotiation between an AP and a STA. The second key may be any one of: a Pairwise Transient Key (PTK), a Group Temporal Key (GTK), an Integrity Group Temporal Key (IGTK), a beacon integrity group temporal key (BIGTK), or a newly defined Temporal Key. The present application does not specifically limit a form of the second key.

In one embodiment, the CMAC mode internally uses AES-128 or AES-256 for encryption. A calculation formula is:

$$\text{Extended MIC} = \text{CMAC}\,(K, M, \text{Tlen}),$$

, where CMAC is a CMAC algorithm defined in NIST Special Publication 800-38B; K is a key used to calculate the extended MIC field; M is masked fields to be verified in the first frame header field, or all fields of the first frame header field, or all fields of the first frame header field and the frame body field (that is, the entire first MPDU frame); and Tlen is a length of the extended MIC field.

In one embodiment, extended MIC calculation may adopt a Galois Message Authentication Code (GMAC) mode. The first frame header field, the second key, a concatenation of a destination address in the first frame header field and a PN value, and the frame body field are used as inputs of a GMAC algorithm to calculate the extended MIC field.

In one embodiment, the second key is a key used to calculate the extended MIC field and is generated during association negotiation between an AP and a STA. The second key may be any one of: a Pairwise Transient Key (PTK), a Group Temporal Key (GTK), an Integrity Group Temporal Key (IGTK), a beacon integrity group temporal key (BIGTK), or a newly defined Temporal Key. The present application does not specifically limit a form of the second key.

In one embodiment, the GMAC mode internally uses AES-128 or AES-256 for encryption. A calculation formula is:

$$\text{Extended MIC} = \text{GMAC} \ (K, IV, P, A),$$

where GMAC is a GMAC algorithm defined in NIST Special Publication 800-38D; K is a key used to calculate the extended MIC field; IV is a concatenation of a destination address Address2 in the first frame header field and a Packet Number (PN) value, where the PN is a Packet Number allocated to the first MPDU frame; P is plaintext data in the frame body, and since extended MIC calculation does not require encryption of plaintext data, P is empty; and A is masked fields to be verified in the first frame header field, or all fields of the first frame header field, or all fields of the first frame header field and the frame body field (that is, the entire first MPDU frame).

In one embodiment, extended MIC calculation may adopt a Hash-based Message Authentication Code (HMAC) mode. The first frame header field, the second key, a source address Address1 in the first frame header field, and a destination address Address2 in the first frame header field are used as inputs of an HMAC algorithm to calculate the extended MIC field.

In one embodiment, the second key is a key used to calculate the extended MIC field and is generated during association negotiation between an AP and a STA. The second key may be any one of: a Pairwise Transient Key (PTK), a Group Temporal Key (GTK), an Integrity Group Temporal Key (IGTK), a beacon integrity group temporal key (BIGTK), or a newly defined Temporal Key. The present application does not specifically limit a form of the second key.

In one embodiment, a calculation formula is:

$$\text{Extended MIC} = \text{HMAC-HASH} \ (K, A1 \ \| \ A2 \ \| \ \text{Data}),$$

where HMAC-HASH is a HASH algorithm; K is a key used to calculate the extended MIC field; A1 is a source address Address 1 in the first frame header field; A2 is a destination address Address2 in the first frame header field; Data is masked fields to be verified in the first frame header field, or all fields of the first frame header field, or all fields of the first frame header field and the frame body field (that is, an entire first MPDU frame); and "∥" denotes concatenation.

At S200, an encryption calculation is performed on plaintext data in the frame body field to obtain a ciphertext data field.

In one embodiment, Additional Authentication Data (AAD) needs to be constructed before the encryption calculation. The AAD is constructed according to partial fields in the first frame header field that do not change during retransmission of the first MPDU frame, and the AAD is used as an input of the encryption calculation.

It should be noted that the masked fields to be verified may change during retransmission of the first MPDU frame and are not included in the AAD.

In one embodiment, the AAD, plaintext data in the frame body field, a first key, and a Nonce are used as four inputs of an encryption calculation module, and after encryption calculation, an encrypted MIC field and a ciphertext data field are obtained.

In one embodiment, the first key is generated during association negotiation between an AP and a STA and may be any one of: a Pairwise Transient Key (PTK), a Group Temporal Key (GTK), an Integrity Group Temporal Key (IGTK), a beacon integrity group temporal key (BIGTK), and the like. The present application does not specifically limit a form of the first key.

In one embodiment, the first key may be the same as the second key. In another embodiment, the first key may be different from the second key.

In one embodiment, the Nonce may be a random number ANonce generated by an AP or a random number SNonce generated by a STA.

In one embodiment, the encryption calculation may adopt a CCM encryption mode or a GCM encryption mode.

In one embodiment, before the encryption calculation, it is not necessary to construct Additional Authentication Data (AAD). Plaintext data in the frame body field, a first key, and a Nonce are used as three inputs of the encryption calculation module, and after encryption calculation, an encrypted MIC field and a ciphertext data field are obtained.

It should be noted that, in this embodiment, since Additional Authentication Data (AAD) is no longer constructed, the encrypted MIC field does not involve the first frame header field and is only used to perform message integrity verification on the frame body field. Therefore, during retransmission of the first MPDU frame, only the extended MIC field and an FCS field need to be updated, thereby improving retransmission efficiency.

In one embodiment, before the encryption calculation, it is not necessary to construct Additional Authentication Data (AAD). Plaintext data in the frame body field, a first key, and a Nonce are used as three inputs of the encryption calculation module, and after encryption calculation, only a ciphertext data field is obtained.

It should be noted that, in this embodiment, an output of the encryption calculation is only the ciphertext data field, that is, no encrypted MIC field is included. By separating encryption of the frame body field from generation of a message integrity code for the entire first MPDU frame, it is possible to avoid re-encrypting the frame body field of the first MPDU frame during retransmission, thereby improving retransmission efficiency.

At S300, an encryption calculation header field is obtained according to a PN value and a first key.

In one embodiment, the first key is generated during association negotiation between an AP and a STA and may be any one of: a Pairwise Transient Key (PTK), a Group Temporal Key (GTK), an Integrity Group Temporal Key (IGTK), a beacon integrity group temporal key (BIGTK), and the like. The present application does not specifically limit a form of the first key.

In one embodiment, the first key may be the same as the second key. In another embodiment, the first key may be different from the second key.

In one embodiment, the PN value is a Packet Number allocated to the first MPDU frame and is used to detect replay attacks. The PN value is pre-allocated before the encryption calculation and the extended MIC calculation.

At S400, a second MPDU frame is obtained according to the first frame header field, the encryption calculation header field, the ciphertext data field, and the extended MIC field.

In one embodiment, the first frame header field, the encryption calculation header field, the ciphertext data field, and the extended MIC field are concatenated to obtain the second MPDU frame. The present application does not limit a position of the extended MIC field.

It should be noted that the second MPDU frame is obtained by performing encryption and extended MIC calculation on the first MPDU frame.

It should be noted that, in this embodiment, inputs of the extended MIC calculation include all fields of the first frame header field and the frame body field (that is, the entire first MPDU frame). The obtained extended MIC field may perform message integrity verification on the entire first MPDU frame, thereby protecting integrity of the entire frame.

In another embodiment, the first frame header field, the encryption calculation header field, the ciphertext data field, the encrypted MIC field, and the extended MIC field are concatenated to obtain the second MPDU frame.

In one embodiment, the extended MIC field may be inserted after the encrypted MIC field. The present application does not limit a position of the extended MIC field.

It should be noted that, in this embodiment, inputs of the extended MIC calculation include partial fields of the first frame header field or all fields of the first frame header field. The obtained extended MIC field may perform message integrity verification on masked fields to be verified in the first frame header field or on the entire first frame header field. The encrypted MIC field is obtained through the encryption calculation and may perform message integrity verification on the AAD and the frame body field or only on the frame body field. The extended MIC field and the encrypted MIC field jointly implement integrity protection of the entire first MPDU frame.

In one embodiment, an AP or a STA may perform S500: transmitting the second MPDU frame.

In one embodiment, after a transmitting party transmits the second MPDU frame, a receiving party calculates the extended MIC field by using a same method as that of the transmitting party, and compares the calculated extended MIC field with the extended MIC field in the received second MPDU frame. Only when the two are the same is plaintext data Data returned; otherwise, the frame is discarded, thereby achieving protection of the first MPDU frame.

In one embodiment, the AP or the STA may further perform, but is not limited to, S600, S700, and S800.

At S600, a second extended MIC field is obtained according to a second frame header field, wherein the second frame header field is obtained by updating the first frame header field.

It should be noted that, when the first MPDU frame needs to be retransmitted, partial frame header fields of the first MPDU frame change, and the second frame header field is obtained after updating the first frame header field.

In one embodiment, extended MIC calculation is performed according to the updated second frame header field to obtain the second extended MIC field. The second extended MIC field may be obtained according to partial fields of the second frame header field, all fields of the second frame header field, or all fields of the second frame header field and the frame body field.

At S700, a third MPDU frame is obtained according to the second frame header field, the encryption calculation header field, the ciphertext data field, and the second extended MIC field.

It should be noted that the encryption calculation header field and the ciphertext data field do not need to be recalculated. Only the second frame header field and the second extended MIC field need to be updated. The third MPDU frame is obtained by updating the second MPDU frame.

In one embodiment, in addition to updating the frame header field and the extended MIC field, a Frame Check Sequence (FCS) is recalculated as a whole and added to the third MPDU frame.

At S800, the third MPDU frame is transmitted.

In one embodiment, the wireless communication method further includes probing and association between network nodes, and may include S900: transmitting a fourth MPDU frame.

In one embodiment, the fourth MPDU frame includes a protection indication field. The protection indication field includes protection capability information for characterizing whether a network node has a capability to process the extended MIC field. The capability to process the extended MIC field may include, but is not limited to, a capability to perform extended MIC calculation.

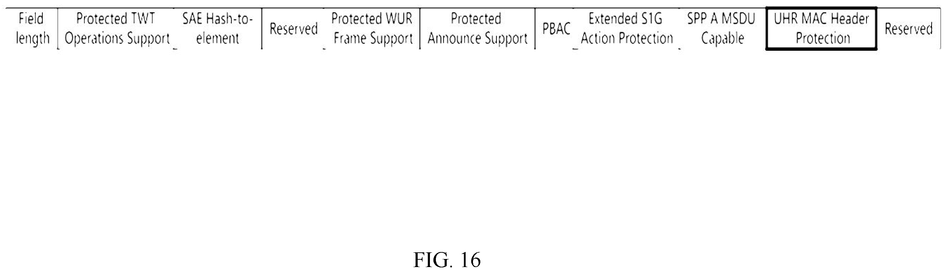

In one embodiment, as shown in FIG. 16, a protection indication identifier is added in an RSNXE field of the fourth MPDU frame. The present application does not specifically limit a position of the protection indication identifier.

In one embodiment, an AP announces, by means of a protection indication identifier carried in a Beacon frame or a Probe Response frame, that the AP has the capability to process the extended MIC field.

It should be noted that the AP actively announces to a STA, by means of a Beacon frame, that the AP has the capability to process the extended MIC field, or sends a Probe Response frame to indicate that the AP has the capability to process the extended MIC field after receiving a Probe Request frame sent by the STA.

In one embodiment, a STA sends an Association Request frame to indicate that the STA has the capability to process the extended MIC field.

It should be noted that, when the STA performs association with an AP, if the STA also has the capability to process the extended MIC field, the STA indicates, in an RSNXE field carried in the Association Request frame, that the STA has the capability to process the extended MIC field.

In one embodiment, the AP is an Ultra High Reliability AP multi-link device (UHR AP MLD), and the STA includes, but is not limited to, a UHR non-AP STA or a UHR non-AP MLD.

In one embodiment, probing between UHR non-AP STAs or UHR non-AP MLDs adopts a Multi-link Probe Request and a Multi-link Probe Response.

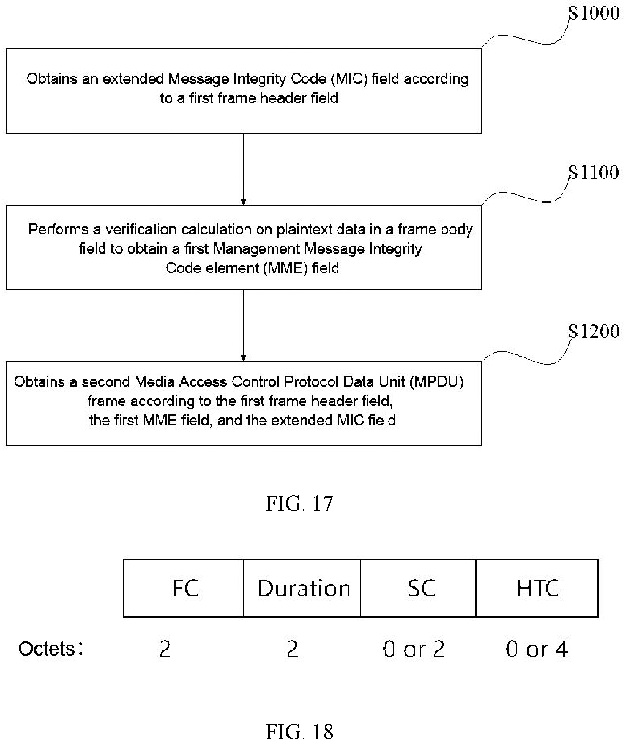

FIG. 17 is a flowchart of a wireless communication method provided in an embodiment of the present application. The wireless communication method may be applied to an AP or a STA, and may include, but is not limited to, S1000, S1100, and S1200.

At S1000, an extended MIC field is obtained according to the first frame header field.

In one embodiment, a first MPDU frame includes a first frame header field and a frame body field. The first MPDU frame is an original MPDU frame that is not encrypted and is not subjected to integrity protection, and includes the first frame header field and the frame body field. The first frame header field is a frame header field of the original MPDU frame, and the frame body field includes unencrypted plaintext data.

In one embodiment, extended MIC calculation is performed according to partial fields of the first frame header field to obtain the extended MIC field.

It should be noted that the partial fields of the first frame header field are masked fields to be verified in the first frame header field, that is, fields requiring additional protection in the first frame header field.

In one embodiment, a composition of the fields to be verified may be as shown in FIG. 18, including an FC-MPDU Frame Control field, a Duration field, a Sequence Number field in an SC-Sequence Control field, and an HTC-HT Control field and extended fields thereof. The FC field includes a Subtype field, a Retry field, a Power Management field, a More Data field, a +HTC field, and other fields filled with 0.

In another embodiment, extended MIC calculation is performed according to all fields of the first frame header field to obtain the extended MIC field.

In another embodiment, extended MIC calculation is performed according to all fields of the first frame header field and all fields of the frame body field (that is, the entire first MPDU frame) to obtain the extended MIC field.

In one embodiment, the extended MIC calculation adopts a Cipher-based Message Authentication Code (CMAC) mode, and the first frame header field, a second key, and a length of the output extended MIC field are used as inputs of a CMAC algorithm to obtain the extended MIC field.

In one embodiment, the second key is a key used to calculate the extended MIC field and is generated during association negotiation between an AP and a STA. The second key may be any one of: a Pairwise Transient Key (PTK), a Group Temporal Key (GTK), an Integrity Group Temporal Key (IGTK), a beacon integrity group temporal key (BIGTK), or a newly defined Temporal Key. The present application does not specifically limit a form of the second key.

In one embodiment, AES-128 or AES-256 is used for encryption inside the CMAC mode, and a calculation formula is:

$$\text{Extended MIC} = \text{CMAC (K, M, Tlen)},$$

where CMAC is a CMAC algorithm defined in NIST Special Publication 800-38B; K is a key used to calculate the extended MIC field; M is masked fields to be verified in the first frame header field, or all fields of the first frame header field, or all fields of the first frame header field and the frame body field (that is, the entire first MPDU frame); and Tlen is a length of the extended MIC field.

In one embodiment, the extended MIC calculation adopts a Galois Message Authentication Code (GMAC) mode, and the first frame header field, a second key, a concatenation of a destination address in the first frame header field and a PN value, and the frame body field are used as inputs of a GMAC algorithm to obtain the extended MIC field.

In one embodiment, the second key is a key used to calculate the extended MIC field and is generated during association negotiation between an AP and a STA. The second key may be any one of: a Pairwise Transient Key (PTK), a Group Temporal Key (GTK), an Integrity Group Temporal Key (IGTK), a beacon integrity group temporal key (BIGTK), or a newly defined Temporal Key. The present application does not specifically limit a form of the second key.

In one embodiment, AES-128 or AES-256 is used for encryption inside GMAC, and a calculation formula is:

$$\text{Extended MIC} = \text{GMAC} (K, IV, P, A),$$

where GMAC is a GMAC algorithm defined in NIST Special Publication 800-38D; K is a key used to calculate the extended MIC field; IV is a concatenation of a destination address Address2 in the first frame header field and a Packet Number (PN) value, where the PN is a Packet Number allocated to the first MPDU frame; P is plaintext data in the frame body field, and since the extended MIC calculation does not require encryption of the plaintext data, P is empty; and A is masked fields to be verified in the first frame header field, or all fields of the first frame header field, or all fields of the first frame header field and the frame body field (that is, the entire first MPDU frame).

In one embodiment, the extended MIC calculation adopts a Hash-based Message Authentication Code (HMAC) mode, and the first frame header field, a second key, a source address Address1 in the first frame header field, and a destination address Address2 in the first frame header field are used as inputs of an HMAC algorithm to obtain the extended MIC field.

In one embodiment, the second key is a key used to calculate the extended MIC field and is generated during association negotiation between an AP and a STA. The second key may be any one of: a Pairwise Transient Key (PTK), a Group Temporal Key (GTK), an Integrity Group Temporal Key (IGTK), a beacon integrity group temporal key (BIGTK), or a newly defined Temporal Key. The present application does not specifically limit a form of the second key.

In one embodiment, a calculation formula is:

$$\text{Extended MIC} = \text{HMAC-HASH} (K, A1 \| A2 \| \text{Data}),$$

where HMAC-HASH is a HASH algorithm; K is a key used to calculate the extended MIC field; A1 is a source address Address 1 in the first frame header field; A2 is a destination address Address2 in the first frame header field; Data is masked fields to be verified in the first frame header field, or all fields of the first frame header field, or all fields of the first frame header field and the frame body field (that is, the entire first MPDU frame); and "$\|$" denotes concatenation.

At S1100, a verification calculation is performed on plaintext data in the frame body field to obtain a first Management MIC Element (MME) field.

In one embodiment, verification calculation is performed according to plaintext data in the frame body field, unmasked fields of the first frame header field, and a first key to obtain the first MME field. It should be noted that the first MME field includes the frame body field of the first MPDU frame and a first MIC field, where the first MIC field is used to perform integrity verification on plaintext data in the frame body field and the unmasked fields of the first frame header field. The unmasked fields are fields that do not change during retransmission of the first MPDU frame.

In one embodiment, the first key is generated during association negotiation between an AP and a STA and may be any one of: a Pairwise Transient Key (PTK), a Group Temporal Key (GTK), an Integrity Group Temporal Key (IGTK), a beacon integrity group temporal key (BIGTK), and the like. The present application does not specifically limit a form of the first key.

In one embodiment, the first key may be the same as the second key. In another embodiment, the first key may be different from the second key.

In one embodiment, the verification calculation adopts a Broadcast/multicast Integrity Protocol (BIP).

In one embodiment, verification calculation is performed according to plaintext data in the frame body field and a first key to obtain the first MME field. It should be noted that the first MME field includes the frame body field of the first MPDU frame and a first MIC field, where the first MIC field is used to perform integrity verification on plaintext data in the frame body field.

In one embodiment, verification calculation is performed according to plaintext data in the frame body field, the first frame header field, and a first key to obtain the first MME field. It should be noted that the first MME field includes the frame body field of the first MPDU frame and a first MIC field, where the first MIC field is used to perform integrity verification on an entire MPDU frame.

At S1200, a second MPDU frame is obtained according to the first frame header field, the first MME field, and the extended MIC field.

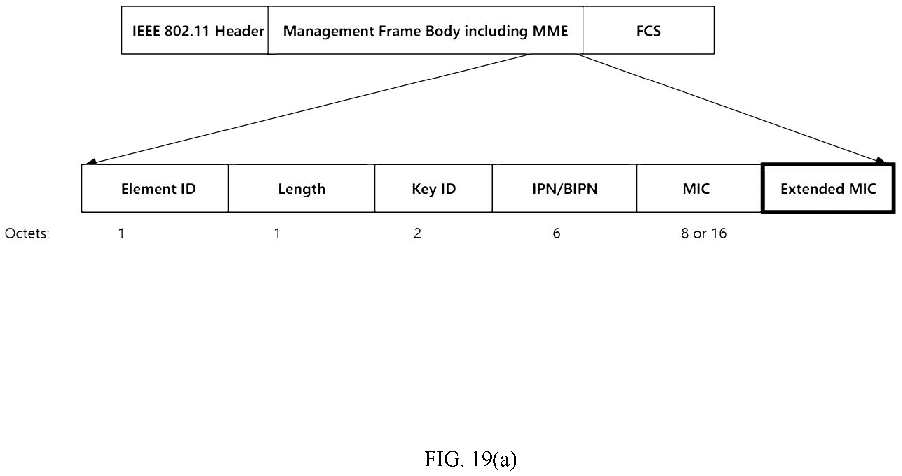

In one embodiment, the extended MIC field is added to the first MME field and then concatenated with the first frame header field to obtain the second MPDU frame. The present application does not limit a position of the extended MIC field. In one embodiment, as shown in FIG. 19(a), the extended MIC field may be added after the first MIC field in the first MME field.

It should be noted that, in this embodiment, the first MME field includes the first MIC field. The first MIC field may be obtained by performing verification calculation according to plaintext data in the frame body field, unmasked fields of the first frame header field, and a first key, and is used to perform integrity verification on plaintext data in the frame body field and the unmasked fields of the first frame header field, where the unmasked fields are fields that do not change during retransmission of the first MPDU frame. Alternatively, the first MIC field may be obtained by performing verification calculation according to plaintext data in the frame body field and a first key, and is used to perform integrity verification on plaintext data in the frame body field.

In another embodiment, the first frame header field and the first MME field are concatenated to obtain the second MPDU frame.

It should be noted that, in this embodiment, the first MME field includes the first MIC field. The first MIC field is obtained by performing verification calculation according to plaintext data in the frame body field, the first frame header field, and a first key, and is used to perform integrity verification on the entire MPDU frame. Since both the extended MIC field and the first MIC field can perform integrity verification on the entire MPDU frame, the first MIC field in the first MME field is retained.

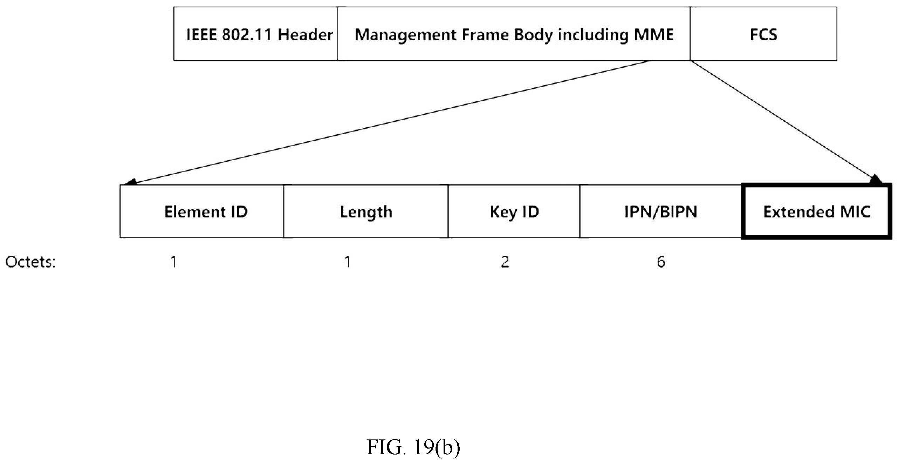

In another embodiment, as shown in FIG. 19(b), the extended MIC field replaces the first MIC field in the first MME field and is then concatenated with the first frame header field to obtain the second MPDU frame.

It should be noted that, in this embodiment, the first MME field includes the first MIC field. The first MIC field is obtained by performing verification calculation according to plaintext data in the frame body field, the first frame header field, and a first key, and is used to perform integrity verification on the entire MPDU frame. Since both the extended MIC field and the first MIC field can perform integrity verification on the entire MPDU frame, the extended MIC field is retained.

In one embodiment, an AP or a STA may perform S1300: transmitting the second MPDU frame.

In one embodiment, after a transmitting party transmits the second MPDU frame, a receiving party calculates the extended MIC field by using a same method as that of the transmitting party, and compares the calculated extended MIC field with the extended MIC field in the received second MPDU frame. Only when the two are the same is plaintext data Data returned; otherwise, the frame is discarded, thereby achieving protection of the first MPDU frame.

In one embodiment, the AP or the STA may further perform, but is not limited to, S1400, S1500, and S1600.

At S1400, a second extended MIC field is obtained according to a second frame header field, wherein the second frame header field is obtained by updating the first frame header field.

It should be noted that, when the first MPDU frame needs to be retransmitted, partial frame header fields of the first MPDU frame change, and the second frame header field is obtained after updating the first frame header field.

In one embodiment, extended MIC calculation is performed according to the updated second frame header field to obtain the second extended MIC field. The second extended MIC field may be obtained according to partial fields of the second frame header field, all fields of the second frame header field, or all fields of the second frame header field and the frame body field.

At S1500, a third MPDU frame is obtained according to the second frame header field, the first MME field, and the second extended MIC field.

It should be noted that the second extended MIC field may be added to the first MME field to obtain the third MPDU frame; or the second extended MIC field may replace the first MIC field in the first MME field to obtain the third MPDU frame.

In one embodiment, in addition to updating the frame header field and the extended MIC field, a Frame Check Sequence (FCS) is recalculated as a whole and added to the third MPDU frame.

At S1600, the third MPDU frame is transmitted.

In order to further describe the wireless communication method provided by embodiments of the present application, the following examples are used for detailed description.

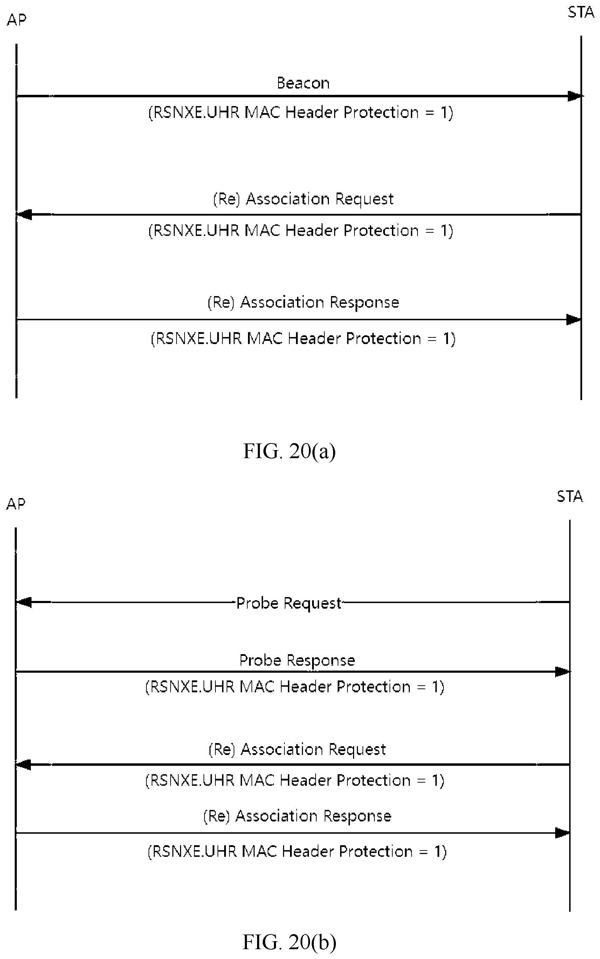

As shown in FIG. 20(a), an embodiment of the present application includes a negotiation method for probing and association between network nodes. The method is implemented by one or more APs and STAs. In this example, one AP and one STA are taken as an example, and the method includes the following steps S101 to S104.

At S101, the AP announces, by means of a protection indication identifier carried in a Beacon frame, that the AP has a frame header protection capability.

It should be noted that the AP indicates, in an RSNXE field carried in the Beacon frame, that the AP has the frame header protection capability, that is, a capability to process the extended MIC field. The protection indication identifier is located in the RSNXE field.

At S102, the STA acquires the frame header protection capability of the AP by receiving the Beacon frame.

At S103, the STA sends an Association Request frame to request association.

It should be noted that, when the STA performs association with the AP and the STA also supports the frame header protection capability, that is, has the capability to process the extended MIC field, the STA indicates the frame header protection capability in an RSNXE field carried in the Association Request frame.

At S104, the AP sends an Association Response frame to respond to the association.

As shown in FIG. 20(b), an embodiment of the present application further includes another negotiation method for probing and association between network nodes. The method is implemented by one or more APs and STAs. In this example, one AP and one STA are taken as an example, and the method includes the following steps S201 to S204.

At S201, the STA sends a Probe Request frame to obtain a frame header protection capability of the AP.

At S202, the AP indicates, by means of a Probe Response frame, that the AP has the frame header protection capability.

It should be noted that the AP indicates, in an RSNXE field carried in the Probe Response frame, that the AP has the frame header protection capability, that is, a capability to process the extended MIC field. The protection indication identifier is located in the RSNXE field.

At S203, the STA sends an Association Request frame to request association.

It should be noted that, when the STA performs association with the AP and the STA also supports the frame header protection capability, that is, has the capability to process the extended MIC field, the STA indicates the frame header protection capability in an RSNXE field carried in the Association Request frame.

At S204, the AP sends an Association Response frame to respond to the association.

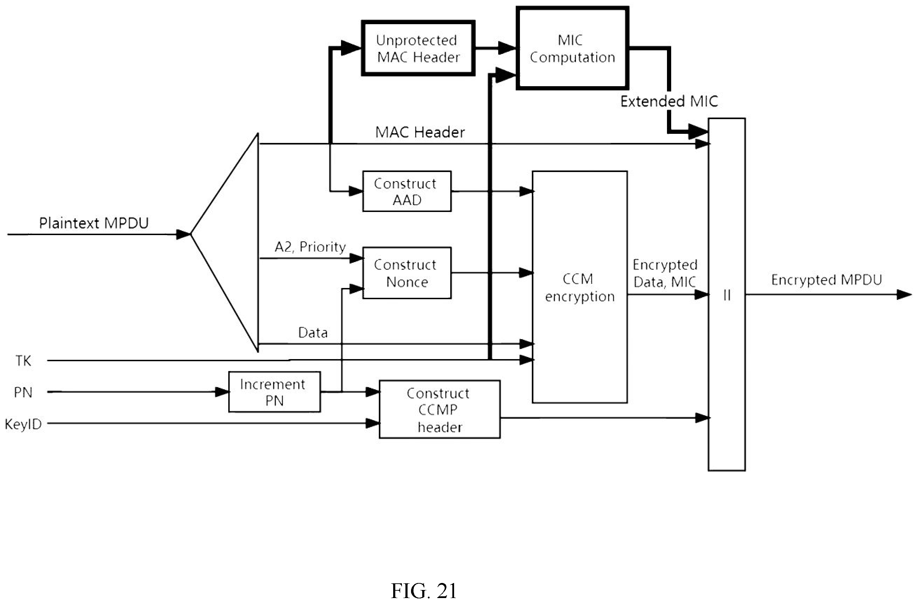

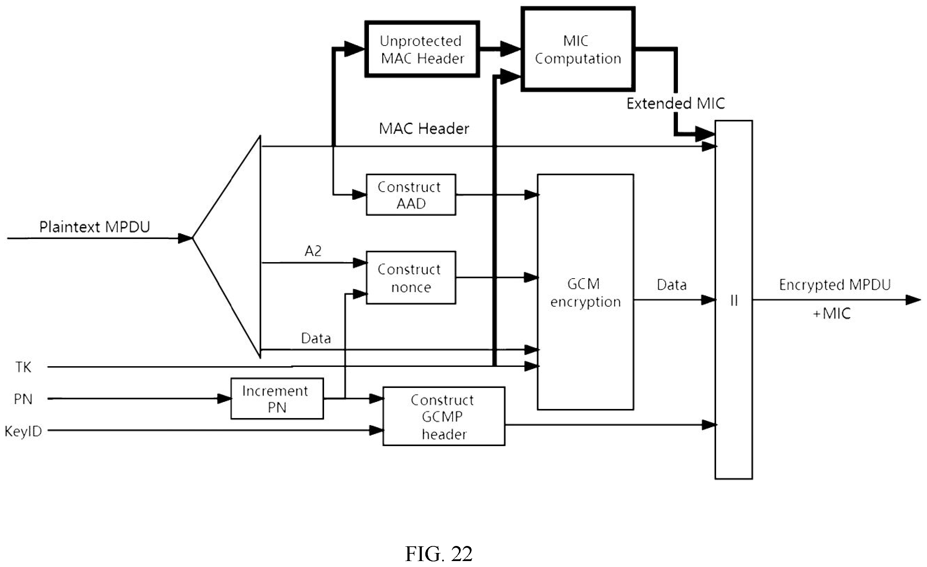

Embodiments of the present application provide a wireless communication method applied to a network node. FIG. 21 illustrates an extended MIC calculation method encrypted by CCMP, and FIG. 22 illustrates an extended MIC calculation method encrypted by GCMP. The method includes the following steps S301 to S305.

At S301, extended MIC calculation is performed according to unprotected fields of a frame header field to obtain an extended MIC field.

It should be noted that a first MPDU frame, that is, a plaintext MPDU frame, includes a frame header field and a frame body field. The frame header field includes masked fields, that is, unprotected fields, which are used for extended MIC calculation. The frame header field further includes unmasked fields, which are used to construct AAD.

At S302, AAD is constructed according to the unmasked fields of the frame header field.

It should be noted that the unmasked fields of the frame header field refer to fields that do not change during retransmission of the MPDU frame. The unprotected fields in S301 are masked fields. The unprotected fields in S301 and the unmasked fields in S302 together constitute the frame header field.

At S303, the AAD, a random number Nonce, plaintext data Data, and a key are used as four inputs of an encryption module, and encryption calculation is performed to obtain a ciphertext data field and an encrypted MIC field.

It should be noted that the Nonce is obtained according to the frame header field and a PN value, wherein the PN value is pre-allocated for the plaintext MPDU frame, and the key is negotiated and determined by network nodes during probing and association.

At S304, an encryption calculation header field is obtained according to the PN value and the key.

It should be noted that the PN value is pre-allocated for the plaintext MPDU frame, and the key is negotiated and determined by network nodes during probing and association. For CCMP encryption, the encryption calculation header field is a CCMP header field; for GCMP encryption, the encryption header field is a GCMP field.

At S305, the frame header field, the encryption header field, the ciphertext data field, the encrypted MIC field, and the extended MIC field are sequentially concatenated to obtain an encrypted MPDU frame.

It should be noted that the present application does not limit a specific position of the extended MIC field. An FCS field is further added to the encrypted MPDU frame to form a final extended CCMP frame or GCMP frame.

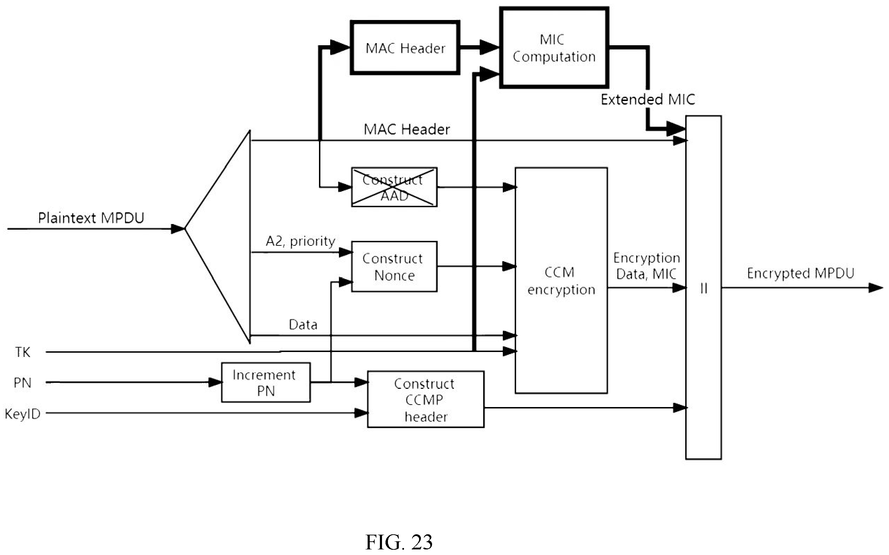

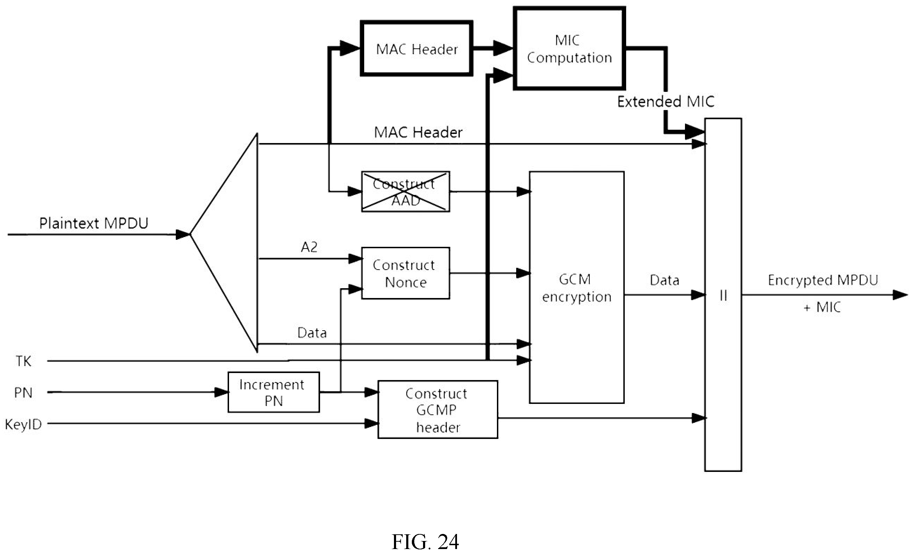

Embodiments of the present application further provide another wireless communication method applied to a network node. FIG. 23 illustrates another extended MIC calculation method encrypted by CCMP, and FIG. 24 illustrates another extended MIC calculation method encrypted by GCMP. The method includes the following steps.

At S401, extended MIC calculation is performed according to the frame header field to obtain an extended MIC field.

It should be noted that a first MPDU frame, that is, a plaintext MPDU frame, includes a frame header field and a frame body field. Extended MIC calculation is performed according to all fields of the frame header field.

Since the entire frame header field is used as an input of the extended MIC calculation, the extended MIC field can implement message integrity verification for the entire frame header, and there is no need to construct AAD.

At S402, a random number Nonce, plaintext data Data, and a key are used as three inputs of an encryption module, and encryption calculation is performed to obtain a ciphertext data field and an encrypted MIC field.

It should be noted that the Nonce is obtained according to the frame header field and a PN value, wherein the PN value is pre-allocated for the plaintext MPDU frame, and the key is negotiated and determined by network nodes during probing and association.

At S403, an encryption calculation header field is obtained according to the PN value and the key.

It should be noted that the PN value is pre-allocated for the plaintext MPDU frame, and the key is negotiated and determined by network nodes during probing and association. For CCMP encryption, the encryption calculation header field is a CCMP header field; for GCMP encryption, the encryption header field is a GCMP field.

At S404, the frame header field, the encryption header field, the ciphertext data field, the encrypted MIC field, and the extended MIC field are sequentially concatenated to obtain an encrypted MPDU frame.

It should be noted that the present application does not limit a specific position of the extended MIC field. An FCS field is further added to the encrypted MPDU frame to form a final extended CCMP frame or GCMP frame.

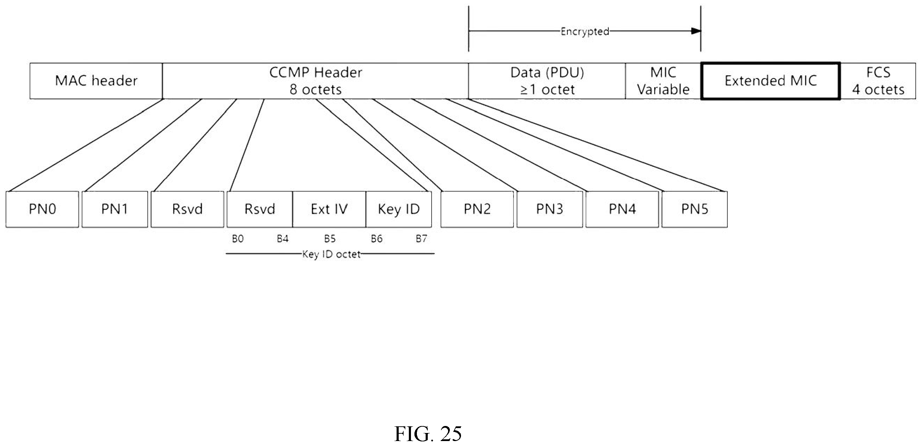

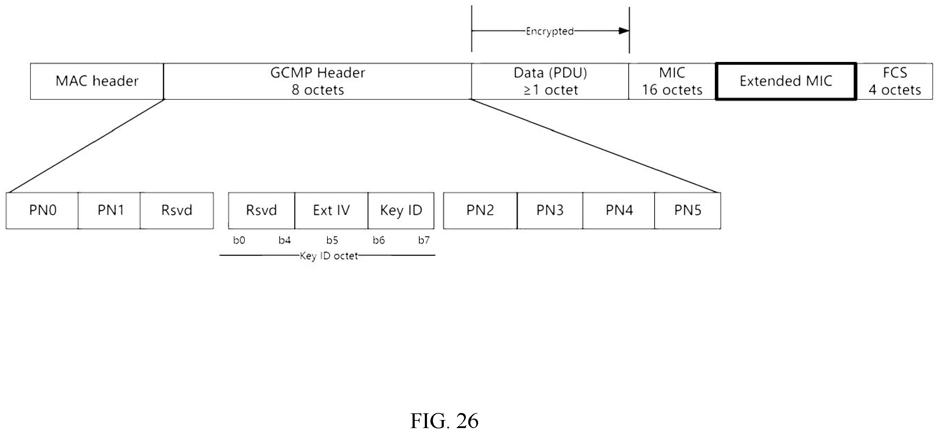

FIG. 25 shows a CCMP frame format extended through S301-S305 or S401-S404, that is, a second MPDU frame subjected to extended MIC calculation and encryption. FIG. 26 shows a GCMP frame format extended through S301-S305 or S401-S404.

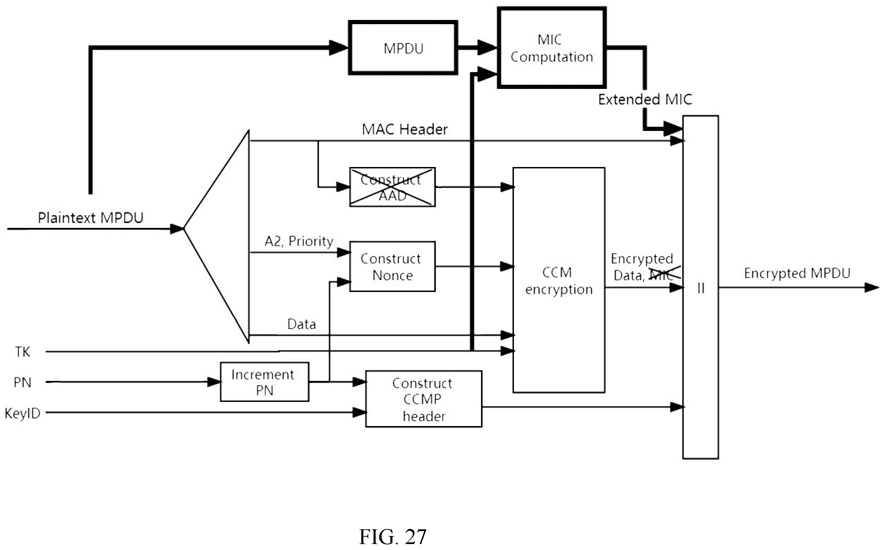

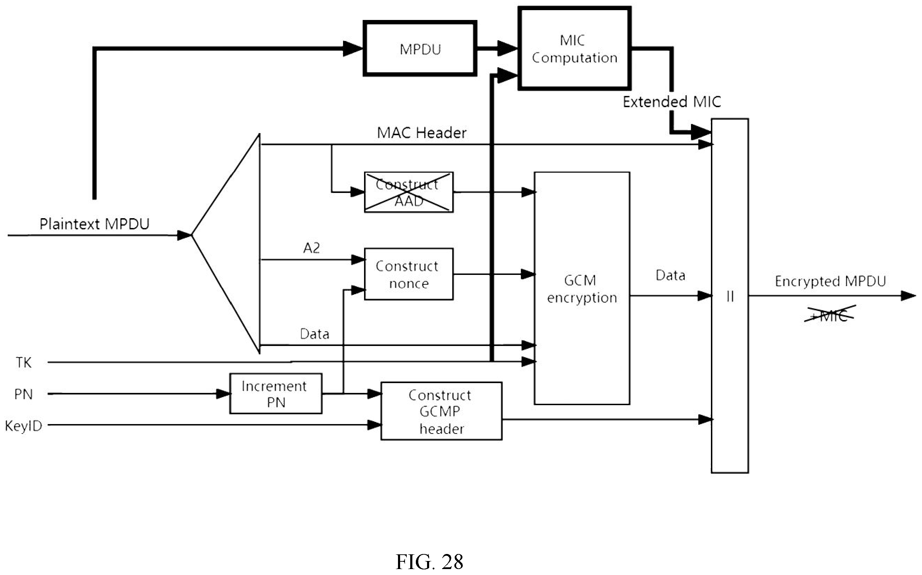

Embodiments of the present application further provide another wireless communication method applied to a network node. FIG. 27 illustrates another extended MIC calculation method encrypted by CCMP, and FIG. 28 illustrates another extended MIC calculation method encrypted by GCMP. The method includes the following steps.

At S501, extended MIC calculation is performed according to the frame header field and the frame body field to obtain an extended MIC field.

It should be noted that a first MPDU frame, that is, a plaintext MPDU frame, includes a frame header field and a frame body field. Extended MIC calculation is performed according to the entire MPDU frame.

Since the entire MPDU frame is used as an input of the extended MIC calculation, the extended MIC field can implement message integrity verification for the entire MPDU frame, and there is no need to construct AAD.

At S502, a random number Nonce, plaintext data Data, and a key are used as three inputs of an encryption module, and encryption calculation is performed to obtain a ciphertext data field.

It should be noted that the Nonce is obtained according to the frame header field and a PN value, wherein the PN value is pre-allocated for the plaintext MPDU frame, and the key is negotiated and determined by network nodes during probing and association. Since the extended MIC field can perform message integrity verification for the entire MPDU frame, the encryption calculation in this step only encrypts the plaintext data.

At S503, an encryption calculation header field is obtained according to the PN value and the key.

It should be noted that the PN value is pre-allocated for the plaintext MPDU frame, and the key is negotiated and determined by network nodes during probing and association. For CCMP encryption, the encryption calculation header field is a CCMP header field; for GCMP encryption, the encryption header field is a GCMP field.

At S504, the frame header field, the encryption header field, the ciphertext data field, and the extended MIC field are sequentially concatenated to obtain an encrypted MPDU frame.

It should be noted that the present application does not limit a specific position of the extended MIC field. An FCS field is further added to the encrypted MPDU frame to form a final extended CCMP frame or GCMP frame.

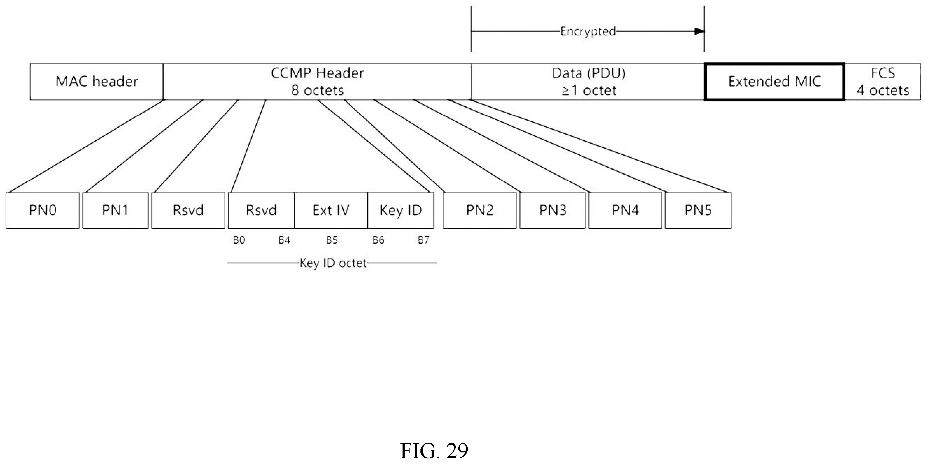

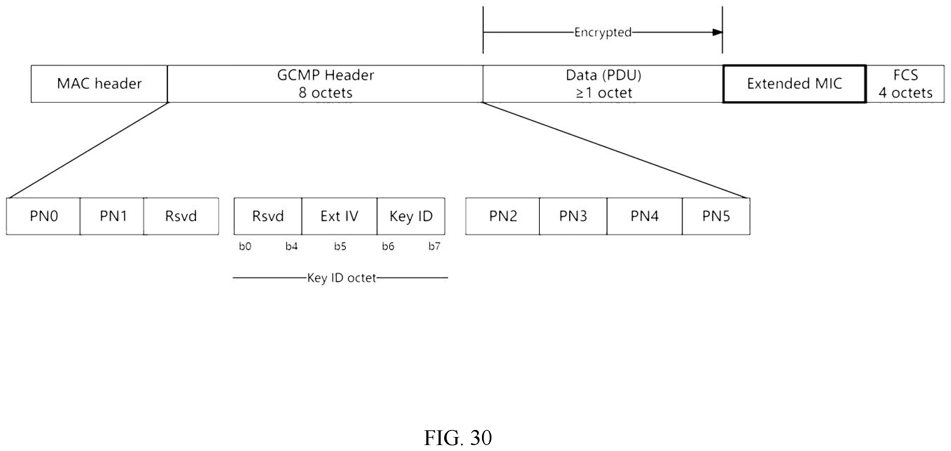

FIG. 29 shows a CCMP frame format extended through S501-S504, and FIG. 30 shows a GCMP frame format extended through S501-S504.

Embodiments of the present application further provide a wireless communication method applied to a network node, which is an extended MIC calculation method using BIP protection as an example. The method includes the following steps.

At S601, extended MIC calculation is performed according to the frame header field to obtain an extended MIC field.

It should be noted that a first MPDU frame, that is, a plaintext MPDU frame, includes a frame header field and a frame body field. Extended MIC calculation is performed according to all fields of the frame header field.

Since the entire frame header field is used as an input of the extended MIC calculation, the extended MIC field can implement message integrity verification for the entire frame header, and there is no need to construct AAD.

At S602, verification calculation is performed according to plaintext data Data in the frame body field and a key to obtain a Management MIC Element (MME) field carrying a first MIC field.

It should be noted that the key is negotiated and determined by network nodes during probing and association. The plaintext data Data in the frame body field is a payload portion. The first MIC field contained in the MME field is used to perform message integrity verification on the frame body field.

At S603, the frame header field, the MME field, and the extended MIC field are sequentially concatenated to obtain an encrypted MPDU frame.

It should be noted that the present application does not limit a specific position of the extended MIC field. An FCS field is further added to the encrypted MPDU frame to form a final extended BIP frame. The first MIC field in the MME field is used to perform message integrity verification on the frame body field, and the extended MIC field is used to perform message integrity verification on the frame header field.

Embodiments of the present application further provide another extended MIC calculation method using BIP protection as an example, including the following steps.

At S701, extended MIC calculation is performed according to the frame header field and the frame body field to obtain an extended MIC field.

It should be noted that a first MPDU frame, that is, a plaintext MPDU frame, includes a frame header field and a frame body field. Extended MIC calculation is performed according to the entire MPDU frame.

Since the entire MPDU frame is used as an input of the extended MIC calculation, the extended MIC field can implement message integrity verification for the entire MPDU frame, and there is no need to construct AAD.

At S702, verification calculation is performed according to the frame header field, plaintext data Data in the frame body field, and a key to obtain an MME field carrying a first MIC field.

It should be noted that the key is negotiated and determined by network nodes during probing and association. The plaintext data Data in the frame body field is a payload portion. The first MIC field contained in the MME field is used to perform message integrity verification on the entire MPDU frame.

At S703, the frame header field and the MME field are sequentially concatenated to obtain an encrypted MPDU frame.

It should be noted that an FCS field is further added to the encrypted MPDU frame to form a final extended BIP frame. Since both the first MIC field in the MME field and the extended MIC field can be used to perform message integrity verification on the entire MPDU frame, only one of them needs to be retained. In this example, the first MIC field in the MME field is retained.

Embodiments of the present application further provide another extended MIC calculation method using BIP protection as an example, including the following steps.

At S801, extended MIC calculation is performed according to the frame header field and the frame body field to obtain an extended MIC field.

It should be noted that a first MPDU frame, that is, a plaintext MPDU frame, includes a frame header field and a frame body field. Extended MIC calculation is performed according to the entire MPDU frame.

Since the entire MPDU frame is used as an input of the extended MIC calculation, the extended MIC field can implement message integrity verification for the entire MPDU frame, and there is no need to construct AAD.

At S802, verification calculation is performed according to the frame header field, plaintext data Data in the frame body field, and a key to obtain an MME field carrying a first MIC field.

It should be noted that the key is negotiated and determined by network nodes during probing and association. The plaintext data Data in the frame body field is a payload portion. The first MIC field contained in the MME field is used to perform message integrity verification on the entire MPDU frame.

At S803, the first MIC field in the MME field is replaced with the extended MIC field to obtain an encrypted MPDU frame.

It should be noted that an FCS field is further added to the encrypted MPDU frame to form a final extended BIP frame. Since both the first MIC field in the MME field and the extended MIC field can be used to perform message integrity verification on the entire MPDU frame, only one of them needs to be retained. In this example, the extended MIC field is retained.

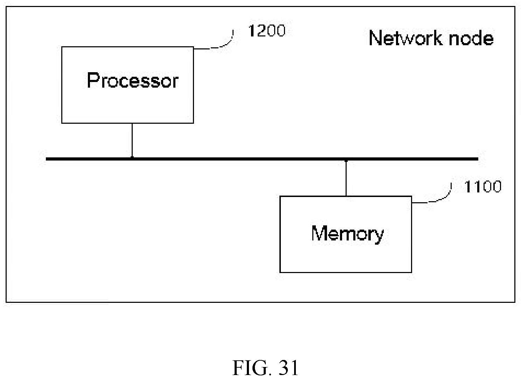

FIG. 31 is a schematic structural diagram of a network node according to an embodiment of the present application. As shown in FIG. 31, the network node includes a memory 1100 and a processor 1200. The number of memories 1100 and processors 1200 may be one or more. FIG. 31 illustrates one memory 1100 and one processor 1200 as an example. The memory 1100 and the processor 1200 in the device may be connected via a bus or in another manner. FIG. 31 illustrates connection via a bus as an example.

The memory 1100, as a computer-readable storage medium, may be configured to store software programs, computer-executable programs, and modules, such as program instructions/modules corresponding to the wireless communication method provided in any embodiment of the present application. The processor 1200 implements the above wireless communication method by running the software programs, instructions, and modules stored in the memory 1100.

The memory 1100 may mainly include a program storage area and a data storage area. The program storage area may store an operating system and one or more application programs required for at least one function. In addition, the memory 1100 may include high-speed random access memory and may further include non-volatile memory, such as at least one disk storage device, flash memory device, or other non-volatile solid-state storage device. In some instances, the memory 1100 may further include memories remotely disposed relative to the processor 1200. These remote memories may be connected to the device via a network. Examples of the network include, but are not limited to, the Internet, an enterprise intranet, a local area network, a mobile communication network, and combinations thereof.

An embodiment of the present application further provides a computer-readable storage medium storing computer-executable instructions, wherein the computer-executable instructions are used to execute the wireless communication method provided in any embodiment of the present application.

An embodiment of the present application further provides a computer program product including a computer program or computer instructions. The computer program or computer instructions are stored in a computer-readable storage medium. A processor of a computer device reads the computer program or computer instructions from the computer-readable storage medium and executes the computer program or computer instructions to cause the computer device to perform the wireless communication method provided in any embodiment of the present application.

The system architecture and application scenarios described in the embodiments of the present application are provided for the purpose of more clearly illustrating the technical solutions of the embodiments of the present application, and do not constitute limitations on the technical solutions provided in the embodiments of the present application. A person skilled in the art will appreciate that, with the evolution of system architectures and the emergence of new application scenarios, the technical solutions provided in the embodiments of the present application are likewise applicable to similar technical problems.

A person of ordinary skill in the art may understand that all or some of the steps in the methods disclosed above, and the functional modules/units in the systems and devices, may be implemented in software, firmware, hardware, or appropriate combinations thereof.

In a hardware implementation, the division of functional modules/units described above does not necessarily correspond to a division of physical components. For example, one physical component may have multiple functions, or one function or step may be performed cooperatively by several physical components. Certain physical components or all physical components may be implemented as software executed by a processor, such as a central processing unit (CPU), a digital signal processor (DSP), or a microprocessor, or may be implemented as hardware, or as an integrated circuit, such as an application-specific integrated circuit (ASIC). Such software may be distributed on a computer-readable medium, and the computer-readable medium may include a computer storage medium (or non-transitory medium) and a communication medium (or transitory medium). As is well known to those of ordinary skill in the art, the term "computer storage medium" includes volatile and non-volatile, removable and non-removable media implemented in any method or technology for storing information such as computer-readable instructions, data structures, program modules, or other data. Computer storage media include, but are not limited to, RAM, ROM, EEPROM, flash memory or other memory technologies, CD-ROM, digital versatile discs (DVDs) or other optical storage, magnetic cassettes, magnetic tape, magnetic disk storage or other magnetic storage devices, or any other medium that can be used to store desired information and that can be accessed by a computer. In addition, as is well known to those of ordinary skill in the art, communication media typically embody computer-readable instructions, data structures, program modules, or other data in a modulated data signal such as a carrier wave or other transmission mechanism, and include any information delivery media.

As used in the present specification, the terms "component," "module," "system," and the like are intended to refer to computer-related entities, including hardware, firmware, a combination of hardware and software, software, or software in execution. For example, a component may be, but is not limited to, a process running on a processor, a processor, an object, an executable file, a thread of execution, a program, and/or a computer. By way of illustration, both an application running on a computing device and the computing device itself may be a component. One or more components may reside within a process and/or a thread of execution, and a component may be localized on one computer and/or distributed between two or more computers. In addition, these components may execute from various computer-readable media having various data structures stored thereon. The components may communicate by way of local and/or remote processes, for example, based on a signal having one or more data packets (e.g., data from one component interacting with another component in a local system, a distributed system, and/or a network such as the Internet through signals exchanged with other systems).

**Claims**

1. A wireless communication method for a network node, the method comprising:

   a first Media Access Control Protocol Data Unit (MPDU) frame comprising a first frame header field and a frame body field;
   obtaining an extended Message Integrity Code (MIC) field according to the first frame header field;
   performing an encryption calculation on plaintext data in the frame body field to obtain a ciphertext data field;
   obtaining an encryption calculation header field according to a Packet Number (PN) value and a first key; and
   obtaining a second MPDU frame according to the first frame header field, the encryption calculation header field, the ciphertext data field, and the extended MIC field, wherein the second MPDU frame is an encrypted MPDU frame.

2. The wireless communication method of claim 1, wherein the obtaining the extended MIC field according to the first frame header field comprises:

   obtaining the extended MIC field according to the first frame header field and the plaintext data in the frame body field; or
   obtaining the extended MIC field according to a first field of the first frame header field, wherein the first field is a field to be verified.

3. The wireless communication method of claim 2, wherein the first field comprises all fields of the first frame header field or a part of the fields of the first frame header field.

4. The wireless communication method of claim 3, wherein the obtaining the extended MIC field according to the first frame header field comprises:
obtaining the extended MIC field according to the first frame header field, a second key, and a length by using a Cipher-based Message Authentication Code (CMAC) mode, wherein the length is a length of the extended MIC field.

5. The wireless communication method of claim 3, wherein the obtaining the extended MIC field according to the first frame header field comprises:
obtaining the extended MIC field according to the first frame header field, a second key, and a concatenation of a destination address and the PN value by using a Galois Message Authentication Code (GMAC) mode.

6. The wireless communication method of claim 3, wherein the obtaining the extended MIC field according to the first frame header field comprises:
obtaining the extended MIC field according to the first frame header field, a second key, a source address, and a destination address by using a Hash-based Message Authentication Code (HMAC) mode.

7. The wireless communication method of any one of claims 4 to 6, wherein the second key comprises one of:
a pairwise transient key (PTK), a group temporal key (GTK), an integrity group temporal key (IGTK), a beacon integrity group temporal key (BIGTK), or a customized temporal key.

8. The wireless communication method of claim 1, further comprising:
obtaining Additional Authentication Data (AAD) according to the first frame header field, wherein the AAD is used for the encryption calculation.

9. The wireless communication method of claim 8, wherein the performing the encryption calculation on the plaintext data in the frame body field to obtain the ciphertext data field comprises:
performing the encryption calculation on the AAD, the plaintext data in the frame body field, the first key, and a nonce to obtain an encrypted MIC field and the ciphertext data field.

10. The wireless communication method of claim 1, wherein the performing the encryption calculation on the plaintext data in the frame body field to obtain the ciphertext data field comprises:
performing the encryption calculation on the plaintext data in the frame body field, the first key, and a nonce to obtain an encrypted MIC field and the ciphertext data field.

11. The wireless communication method of claim 1, wherein the performing the encryption calculation on the plaintext data in the frame body field to obtain the ciphertext data field comprises:
performing the encryption calculation on the plaintext data in the frame body field, the first key, and a nonce to obtain the ciphertext data field.

12. The wireless communication method of any one of claims 9 to 10, wherein the obtaining the second MPDU frame according to the first frame header field, the encryption calculation header field, the ciphertext data field, and the extended MIC field comprises:
obtaining the second MPDU frame according to the first frame header field, the encryption calculation header field, the ciphertext data field, the encrypted MIC field, and the extended MIC field.

13. The wireless communication method of claim 1, further comprising:
transmitting the second MPDU frame.

14. The wireless communication method of claim 13, after transmitting the second MPDU frame, further comprising:

obtaining a second extended MIC field according to a second frame header field, wherein the second frame header field is obtained by updating the first frame header field;
obtaining a third MPDU frame according to the second frame header field, the encryption calculation header field, the ciphertext data field, and the second extended MIC field; and
transmitting the third MPDU frame.

15. The wireless communication method of claim 1, further comprising:
transmitting a fourth MPDU frame, the fourth MPDU frame comprising a protection indication field for characterizing a capability of the network node to process the extended MIC field.

16. The wireless communication method of claim 15, wherein the protection indication field comprises protection capability information, the protection capability information being for characterizing the capability of the network node to process the extended MIC field.

17. A wireless communication method for a network node, the method comprising:

a first MPDU frame comprising a first frame header field and a frame body field;
obtaining an extended MIC field according to the first frame header field;
performing a verification calculation on plaintext data in the frame body field to obtain a first Management MIC Element (MME) field; and
obtaining a second MPDU frame according to the first frame header field, the first MME field, and the extended MIC field.

18. The wireless communication method of claim 17, wherein the obtaining the extended MIC field according to the first frame header field comprises:

obtaining the extended MIC field according to all fields of the first frame header field and the plaintext data in the frame body field;
obtaining the extended MIC field according to all fields of the first frame header field, wherein the all fields are fields to be verified; or
obtaining the extended MIC field according to a part of fields of the first frame header field, wherein the part of fields are fields to be verified.

19. The wireless communication method of claim 18, wherein the obtaining the extended MIC field according to the first frame header field comprises:
obtaining the extended MIC field according to the first frame header field, a second key, and a length by using a Cipher-based Message Authentication Code (CMAC) mode, wherein the length is a length of the extended MIC field.

20. The wireless communication method of claim 18, wherein the obtaining the extended MIC field according to the first frame header field comprises:
obtaining the extended MIC field according to the first frame header field, a second key, and a concatenation of a destination address and a PN value by using a Galois Message Authentication Code (GMAC) mode.

21. The wireless communication method of claim 18, wherein the obtaining the extended MIC field according to the first frame header field comprises:
obtaining the extended MIC field according to the first frame header field, a second key, a source address, and a destination address by using a Hash-based Message Authentication Code (HMAC) mode.

22. The wireless communication method of any one of claims 19 to 21, wherein the second key comprises one of:
a pairwise transient key (PTK), a group temporal key (GTK), an integrity group temporal key (IGTK), a beacon integrity group temporal key (BIGTK), or a customized temporal key.

23. The wireless communication method of claim 17, wherein the performing the verification calculation on the plaintext data in the frame body field to obtain the first MME field comprises:
performing the verification calculation on the plaintext data in the frame body field and a first key to obtain the first MME field carrying a first MIC field, wherein the first MME field comprises the first MIC field.

24. The wireless communication method of claim 23, wherein the obtaining the second MPDU frame according to the first frame header field, the first MME field, and the extended MIC field comprises:

adding the extended MIC field to the first MME field to obtain a second MME field; and
obtaining the second MPDU frame according to the first frame header field and the second MME field.

25. The wireless communication method of claim 17, wherein the performing the verification calculation on the plaintext data in the frame body field to obtain the first MME field comprises:
performing the verification calculation on the first frame header field, the plaintext data in the frame body field, and a first key to obtain the first MME field, wherein the first MME field comprises a first MIC field.

26. The wireless communication method of claim 25, wherein the obtaining the second MPDU frame according to the first frame header field, the first MME field, and the extended MIC field comprises:

obtaining the second MPDU frame according to the first frame header field and the first MME field; or
replacing the first MIC field in the first MME field with the extended MIC field to obtain a second MME field, and obtaining the second MPDU frame according to the first frame header field and the second MME field.

27. The wireless communication method of claim 17, further comprising:
transmitting the second MPDU frame.

28. The wireless communication method of claim 27, after transmitting the second MPDU frame, further comprising:

obtaining a second extended MIC field according to a second frame header field, wherein the second frame header field is obtained by updating the first frame header field;
obtaining a third MPDU frame according to the second frame header field, the first MME field, and the second extended MIC field; and
transmitting the third MPDU frame.

29. A wireless communication device, comprising:

at least one processor; and
at least one memory configured to store at least one program;
wherein the at least one program, when executed by the at least one processor, causes the at least one processor to perform the wireless communication method of any one of claims 1 to 28.

30. A computer-readable storage medium, storing computer-executable instructions which, when executed by a computer, cause the computer to perform the wireless communication method of any one of claims 1 to 28.

31. A computer program product comprising a computer program or computer instructions, wherein the computer program or the computer instructions are stored in a computer-readable storage medium, and a processor of a computer device reads the computer program or the computer instructions from the computer-readable storage medium and executes the computer program or the computer instructions to cause the computer device to perform the wireless communication method of any one of claims 1 to 28.

FIG. 1

EP 4 773 644 A1

FIG. 2

| IEEE 802.11 Header | Management Frame Body including MME | FCS |
|---|---|---|

| Element ID | Length | Key ID | IPN/BIPN | MIC |
|---|---|---|---|---|

| Octets: | 1 | 1 | 2 | 6 | 8 or 16 |
|---|---|---|---|---|---|

FIG. 3

EP 4 773 644 A1

Pairwise Master Key (PMK)

PRF-Length(PMK, "Pairwise key expansion",
Min(AA,SPA) II Max(AA,SPA) II
Min(ANonce, SNonce) II
Max(ANonce, SNonce))

| Pairwise Transient Key (PTK) (Length bits) | | |
|---|---|---|
| EAPOL-Key Key Confirmation Key L(PTK,0,KCK_bits) (KCK) | EAPOL-Key Key Encryption Key L(PTK,KCK_bits, KEK_bits) (KEK) | Temporal Key L(PTK,KCK_bits+KEK_bits,TK_bits) (TK) |

## FIG. 4

Group Master Key (GMK)

PRF-Length(GMK, "Group key expansion", AA II GNonce)

| Group Temporal Key(GTK) (Length bits) | |
|---|---|
| Temporal Key L(GTK,0,TK_bits) | |

## FIG. 5

| IEEE Std 802.11 Station<br>IEEE Std 802.1X Supplicant | | IEEE Std 802.11 Access Point<br>IEEE Std 802.1X Authenticator |
|---|---|---|
| SNonce = Random | | ANonce = Random |

EAPOL-Key (0, 0, 1, 0, P, 0, 0, ANonce, 0, {})

Calculate PTK using ANonce and SNonce

EAPOL-Key (0, 1, 0, 0, P, 0, 0, SNonce, MIC, {RSNE})

Calculate PTK using ANonce and SNonce

EAPOL-Key (1, 1, 1, 1, P, 0, Key RSC, ANonce, MIC, {RSNE, GTK[KeyID$_{GTK}$], IGTK[KeyID$_{IGTK}$]})

EAPOL-Key (1, 1, 0, 0, P, 0, 0, 0, MIC, {})

Set temporal Encryption Key and (TKIP only) MIC Key
Set GTK for KeyID$_{GTK}$, IGTK for KeyID$_{IGTK}$.

Set Temporal Encryption Key and (TKIP only) MIC Key

## FIG. 6

| | AKM Suite Count | AKM Suite List | RSN Capabilities | PMKID Count | PMKID List | Group Management Cipher Suite |
|---|---|---|---|---|---|---|
| Octets: | 0 or 2 | 0 or (4 x n) | 0 or 2 | 0 or 2 | 0 or (16 x s) | 0 or 4 |

## RSNE format

| | Element ID | Length | Version | Group Data Cipher Suite | Pairwise Cipher Suite Count | Pairwise Cipher Suite List |
|---|---|---|---|---|---|---|
| Octets: | 1 | 1 | 2 | 0 or 4 | 0 or 2 | 0 or (4 x m) |

## FIG. 7

| OUI | Suite type | Meaning |
|---|---|---|
| 00-0F-AC | 0 | Use group cipher suite |
| 00-0F-AC | 1 | WEP-40 |
| 00-0F-AC | 2 | TKIP |
| 00-0F-AC | 3 | Reserved |
| 00-0F-AC | 4 | CCMP-128 |
| 00-0F-AC | 5 | WEP-104 |
| 00-0F-AC | 6 | BIP-CMAC-128 |
| 00-0F-AC | 7 | Group addressed traffic not allowed |
| 00-0F-AC | 8 | GCMP-128 |
| 00-0F-AC | 9 | GCMP-256 |
| 00-0F-AC | 10 | CCMP-256 |
| 00-0F-AC | 11 | BIP-GMAC-128 |
| 00-0F-AC | 12 | BIP-GMAC-256 |
| 00-0F-AC | 13 | BIP-CMAC-256 |
| 00-0F-AC | 14–255 | Reserved |
| Other OUI or CID | Any | Vendor-specific |

FIG. 8

| Bit | Information | Notes |
|---|---|---|
| 0-3 | Field length | The length of the Extended RSN Capabilities field, in octets, minus 1, i.e., n-1. |
| 4 | Protected TWT Operations Support | (#3220)A STA sets the Protected TWT Operations Support field to 1 when dot11ProtectedTWTOperationsImplemented is true, and sets it to 0 otherwise. See 10.46.1 (TWT overview). |
| 5 | SAE Hash-to element(#3178) | (#3220)A STA sets the SAE hash-to-element field to 1 when it supports the hash-to-element method to obtain the PWE instead of looping, and sets it to 0 otherwise.(#3168) See 12.4.4.2.3 (Hash-tolement(#331) generation of the password element with ECC groups) and 12.4.4.3.3 (Direct generation of the password element with FFC groups)<br><br>NOTE -If SAE is not negotiated, this field is ignored by the receiver.(#3223) |
| 6(M34) | Reserved | Used by the Wi-Fi Alliance®ª |
| 7(11ba) | Protected WUR Frame Support | (#3220)A STA sets the Protected WUR Frame Support field to 1 when dot11RSNAWURFrameProtectionActivated is true, and sets it to 0 otherwise. |
| 11(11ay) (M34) | Protected Announce Support | (#3220)A non-EDMG STA sets the Protected Announce Support field to 1 when dot11ProtectedAnnounceImplemented is true, and sets it to 0 otherwise. See 12.6.18 (Robust management frame selection procedure). |
| 12 (#1002) | PBAC | A STA sets the PBAC field to indicate it can establish a protected block ack agreement and sets it to 0 otherwise. |
| 13 (#1276) | Extended S1G Action Protection | (#3220)A STA sets the Extended S1G Action Protection field to 1 when dot11ExtendedS1GActionProtectionOperationsImplemented is true and sets it to 0 otherwise. |
| 14 (M57) | SPP A MSDU Capable | A non-DMG STA sets the SPP A MSDU Capable field(#3167) to 1 if dot11SPPAMSDUCapable is true. Otherwise, this field(#3167) is set to 0. See 10.11 (A-MSDU operation). |
| (M34)8,9,10,1 5-(8×n-1) | Reserved | |

FIG. 9

FIG. 10

FIG. 11

| 2 | 2 | 6 | 0 or 6 | 0 or 6 | 0 or 2 | 0 or 6 | 0 or 2 | 0 or 4 |
|---|---|---|---|---|---|---|---|---|
| Frame Control | Duration /ID | Address 1 | Address 2 | Address 3 | Sequence Control | Address 4 | Qos Control | HT Control |

MAC header

| B0 B1 | B2 | B3 B4 B7 | B8 | B9 | B10 | B11 | B12 | B13 | B14 | B15 |
|---|---|---|---|---|---|---|---|---|---|---|
| Protocol Version | Type | Subtype | To DS | From DS | More fragements | Retry | Power Management | More Data | Protected Frame | +HTC |

Bits: 2 2 4 1 1 1 1 1 1 1 1

| B0 | B3 | B4 | B15 |
|---|---|---|---|
| Fragement Number | | Sequence Number | |

Bits: 4 12

masked fields

FIG. 12

| Control ID value | Meaning | Length of the Control Information subfield (bits) | Content of the Control Information subfield |
|---|---|---|---|
| 0 | Triggered response scheduling (TRS) | 26 | See 9.2.4.7.1 (TRS Control) |
| 1 | Operating mode (OM) | 12 | See 9.2.4.7.2 (OM Control) |
| 2 | HE link adaptation (HLA)/EHT link adaptation (ELA) | 26 | See 9.2.4.7.3 (HLA Control)/ 9.2.4.7.11 (ELA Control) |
| 3 | Buffer status report (BSR) | 26 | See 9.2.4.7.4 (BSR Control) |
| 4 | UL power headroom (UPH) | 8 | See 9.2.4.7.5 (UPH Control) |
| 5 | Bandwidth query report (BQR) | 10 | See 9.2.4.7.6 (BQR Control) |
| 6 | Command and status (CAS) | 8 | See 9.2.4.7.7 (CAS Control) |
| 7 | EHT operating mode (EHT OM) | 6 | See 9.2.4.7.8 (EHT OM Control) |
| 8 | Single response scheduling (SRS) | 10 | See 9.2.4.7.9 (SRS Control) |
| 9 | AP assistance request (AAR) | 20 | See 9.2.4.7.10 (AAR Control) |
| 10–14 ~~7–14~~ | Reserved | | |
| 15 | Ones need expansion surely (ONES) | 26 | Set to all 1s |

FIG. 13

S100

Obtains an extended Message Integrity Code
(MIC) field according to a first frame header field

S200

Performs an encryption calculation on plaintext data in a
frame body field to obtain a ciphertext data field

S300

Obtains an encryption calculation header field according to a
Packet Number (PN) value and a first key

S400

Obtains a second Media Access Control Protocol Data Unit
(MPDU) frame according to the first frame header field,
the encryption calculation header field,
the ciphertext data field, and the extended MIC field

FIG. 14

| FC | Duration | SC | QC | HTC |
|----|----------|-----|-----|------|
| 2 | 2 | 0 or 2 | 0 or 2 | 0 or 4 |

Octets:

FIG. 15

| Field length | Protected TWT Operations Support | SAE Hash-to-element | Reserved | Protected WUR Frame Support | Protected Announce Support | PBAC | Extended S1G Action Protection | SPP A MSDU Capable | UHR MAC Header Protection | Reserved |
|---|---|---|---|---|---|---|---|---|---|---|

FIG. 16

S1000

Obtains an extended Message Integrity Code (MIC) field according
to a first frame header field

S1100

Performs a verification calculation on plaintext data in a frame body
field to obtain a first Management Message Integrity
Code element (MME) field

S1200

Obtains a second Media Access Control Protocol Data Unit (MPDU)
frame according to the first frame header field,
the first MME field, and the extended MIC field

FIG. 17

| FC | Duration | SC | HTC |
|---|---|---|---|

Octets:    2        2       0 or 2    0 or 4

FIG. 18

EP 4 773 644 A1

| IEEE 802.11 Header | Management Frame Body including MME | FCS |
|---|---|---|

| Element ID | Length | Key ID | IPN/BIPN | MIC | Extended MIC |
|---|---|---|---|---|---|

Octets: 1     1     2     6     8 or 16

FIG. 19(a)

FIG. 19(b)

Octets:

| Element ID | Length | Key ID | IPN/BIPN | Extended MIC |
|---|---|---|---|---|
| 1 | 1 | 2 | 6 | |

IEEE 802.11 Header | Management Frame Body including MME | FCS

FIG. 20(a)

FIG. 20(b)

FIG. 21

FIG. 22

FIG. 23

FIG. 24

FIG. 25

EP 4 773 644 A1

| | MAC header | GCMP Header<br>8 octets | Data (PDU)<br>≥1 octet | MIC<br>16 octets | **Extended MIC** | FCS<br>4 octets |

Encrypted

| PN0 | PN1 | Rsvd |

| Rsvd | Ext IV | Key ID |
| b0   b4 | b5 | b6   b7 |

Key ID octet

| PN2 | PN3 | PN4 | PN5 |

FIG. 26

FIG. 27

Plaintext MPDU

MPDU

MIC Computation

Extended MIC

MAC Header

Construct AAD

A2, Priority

Construct Nonce

Data

CCM encryption

Encrypted Data, MIC

Construct CCMP header

Increment PN

TK

PN

KeyID

‖

Encrypted MPDU

FIG. 28

FIG. 29

FIG. 30

FIG. 31

## INTERNATIONAL SEARCH REPORT

International application No.

**PCT/CN2024/093375**

| A. | CLASSIFICATION OF SUBJECT MATTER |
| --- | --- |

H04W12/033(2021.01)i

According to International Patent Classification (IPC) or to both national classification and IPC

| B. | FIELDS SEARCHED |
| --- | --- |

Minimum documentation searched (classification system followed by classification symbols)

IPC:H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP: 媒体, 访问, 控制, 帧, 扩展, 完整性, 头, 校验, media, access, control, frame, extension, integrity, header, verification, MIC, MPDU, PN, AAD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2012033379 A2 (LG ELECTRONICS INC.) 15 March 2012 (2012-03-15) description, paragraphs [0027]-[0090] | 1-31 |
| A | CN 101986726 A (CHINA IWNCOMM CO., LTD.) 16 March 2011 (2011-03-16) entire document | 1-31 |
| A | CN 112867005 A (ESPRESSIF SYSTEMS (SHANGHAI) CO., LTD.) 28 May 2021 (2021-05-28) entire document | 1-31 |
| A | US 2023232218 A1 (APPLE INC.) 20 July 2023 (2023-07-20) entire document | 1-31 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 July 2024** | **24 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/093375**

| Patent document cited in search report | | | Publication date (day/month/year) | Patent family member(s) | | | Publication date (day/month/year) |
|---|---|---|---|---|---|---|---|
| WO | 2012033379 | A2 | 15 March 2012 | US | 2013173924 | A1 | 04 July 2013 |
| | | | | US | 8924732 | B2 | 30 December 2014 |
| | | | | EP | 2614613 | A2 | 17 July 2013 |
| | | | | EP | 2614613 | A4 | 12 March 2014 |
| | | | | EP | 2614613 | B1 | 11 April 2018 |
| | | | | AU | 2011299647 | A1 | 11 April 2013 |
| | | | | AU | 2011299647 | B2 | 11 September 2014 |
| | | | | JP | 2013541887 | A | 14 November 2013 |
| | | | | JP | 5681288 | B2 | 04 March 2015 |
| | | | | CA | 2810661 | A1 | 15 March 2012 |
| | | | | CA | 2810661 | C | 24 November 2015 |
| | | | | KR | 20130036776 | A | 12 April 2013 |
| | | | | KR | 101363135 | B1 | 14 February 2014 |
| | | | | US | 2015089237 | A1 | 26 March 2015 |
| | | | | US | 9197415 | B2 | 24 November 2015 |
| | | | | CN | 103109496 | A | 15 May 2013 |
| CN | 101986726 | A | 16 March 2011 | WO | 2012055204 | A1 | 03 May 2012 |
| CN | 112867005 | A | 28 May 2021 | None | | | |
| US | 2023232218 | A1 | 20 July 2023 | EP | 4213518 | A1 | 19 July 2023 |
| | | | | JP | 2023103972 | A | 27 July 2023 |
| | | | | CN | 116456333 | A | 18 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311375868